# EUROPEAN PATENT APPLICATION

(11) **EP 1 715 633 A1**
(43) Date of publication of application: **25.10.2006**
(21) Application number: 05709756.0
(22) Date of filing: 04.02.2005
(51) Int. Cl.: H04L 12/56, H04L 12/28, H04L 12/46, H04Q 7/22

(54) **COMMUNICATION HANDOVER METHOD, COMMUNICATION MESSAGE PROCESSING METHOD, AND PROGRAM FOR EXECUTING THESE METHODS BY USE OF COMPUTER**

(30) Priority: 06.02.2004 JP 2004031428; 13.02.2004 JP 2004037516; 01.03.2004 JP 2004056853; 29.07.2004 JP 2004222521
(71) Applicant: MATSUSHITA ELECTRIC INDUSTRIAL CO., LTD., Kadoma-shi, Osaka 571-8501 (JP)
(72) Inventor: HORI, Takako., c/o Matsushita El.Ind.Co Ltd, Osaka-shi, Osaka 540-6319 (JP); UE, Toyoki., c/o Matsushita El.Ind. CO Ltd, Osaka-shi, Osaka 540-6319 (JP); CHENG, Hong., c/o Panasonic Singp Lab.Pte.Ltd, Tai-Seng Industrial Estate SGP,534415 (SG)
(74) Representative: Lehmann, Judith Christina
(86) International application number: PCT/JP2005/001691
(87) International publication number: WO 2005/076548

(57) **Abstract**

Disclosed is a technique so arranged that, after handover, a mobile terminal can promptly and continuously accept an additional service (for example, QoS assurance), the mobile terminal has accepted before the handover. With this technique, when the mobile terminal (MN 10) carries out the handover, the MN selects, as a proxy, a node (QNE (proxy) 68) having NSLP for QoS, which exists in the vicinity of an AR (access router) 31 pertaining to a subnet 30 which is a movement destination of the MN (near an AR in a network configuration), and transmits, to this proxy, a message including a flow identifier and a session identifier, which are related to a path 24 established with respect to a CN 60 before the handover. This proxy transmits a message including these flow identifier and session identifier to the CN for, on the basis of a response result to this message, establishing a new path 34 and finding a crossover node at which two paths start to intersect with each other.

## Description

### TECHNICAL FIELD

The present invention relates to a communication handover method, communication message processing method and a program for executing these methods by the use of a computer, related to the handover for a mobile terminal (mobile node) which carries out radio communications, and more particularly to a communication handover method, communication message processing method and a program for executing these methods by the use of a computer, related to a mobile node designed to carry out radio communications through the use of a mobile IPv6 (Mobile Internet Protocol version 6) protocol which is a next-generation internet protocol.

### BACKGROUND ART

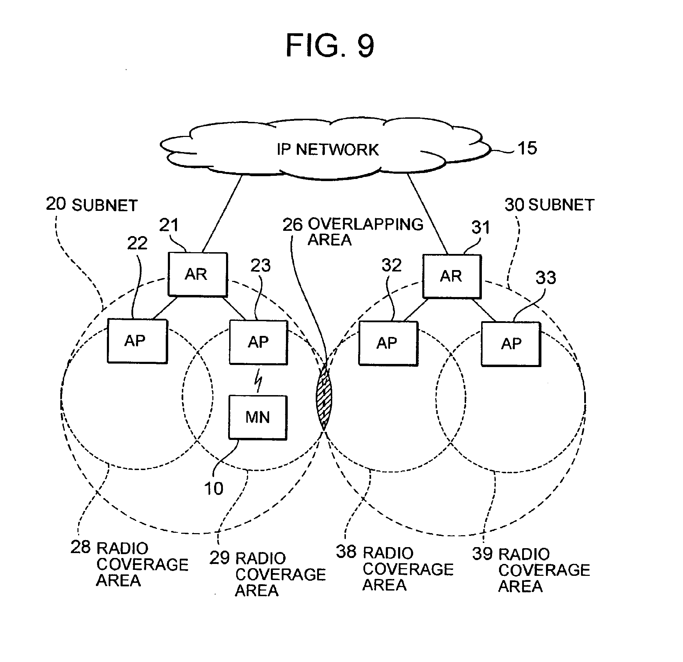

As a technique capable of offering a connection with a communication network in a seamless fashion even in the middle of movement to a user who gains access from a mobile terminal through a radio network to a communication network such as the internet, a technique utilizing the mobile IPv6 establishing a next-generation internet protocol has come into widespread use. Referring to FIG. 9, a description will be given of a radio communication system utilizing this mobile IPv6. A technique on the mobile IPv6, described hereinbelow, is disclosed in, for example, the following Non-Patent Document 1.

The radio communication system shown in FIG. 9 includes an IP network (communication network) 15 such as the internet, a plurality of subnets (each of which is referred to equally as a subnetwork) 20 and 30 connected to the IP network 15, and a mobile terminal (MN : Mobile Node) 10 which can make a connection to one of the plurality of subnets 20 and 30. In FIG. 9, two subnets 20 and 30 are shown as the plurality of subnets 20 and 30.

The subnet 20 is made up of an access router (AR) 21 which conducts the routing with respect to an IP packet (packet data), and a plurality of access points (AP) 22 and 23 establishing unique radio coverage areas (communicable areas) 28 and 29. These APs 22 and 23 are connected to the AR 21, and the AR 21 is connected to the IP network 15. In FIG. 9, two APs 22 and 23 are shown as the plurality of APs 22 and 23. Moreover, the subnet 30 is made up of an AR 31 and a plurality of APs 32 and 33 in the same connection mode as that of the aforesaid subnet 20.

The AR 21 which is an component of the subnet 20 and the AR 31 which is an component of the subnet 30 are communicable through the IP network 15, that is, the subnet 20 and the subnet 30 are connected through the IP network 15.

In the radio communication system shown in FIG. 9, let it be assumed that the MN 10 has started a radio communication with the AP 23 in the radio coverage area 29. At this time, in a case in which an IPv6 address allocated to the MN 10 is not suitable for an IP address system of the subnet 20, the MN 10 existing in the radio coverage area 29 acquires an IPv6 address suitable for the subnet 20, i.e., a care of address (CoA), through a radio communication with respect to the AP 23.

In this connection, as methods for the MN 10 to acquires the CoA, there are a method of allocating it thereto from a DHCP server in a stateful fashion according to a method such as DHCPv6 and a method in which the MN 10 acquires a network prefix and prefix length of the subnet 20 from the AP 21 so as to automatically generate a CoA in a stateless fashion by combining the network prefix and prefix length, acquired from the AR 21, and a link layer address or the like of the MN 10.

In addition, the MN 10 registers (Binding Update : BU) the acquired CoA with respect to a router (home agent) on a home network, to which it pertains, or a specific communication partner (Correspondent Node: CN), thereby enabling the transmission or reception of packet data in the subnet 20.

Thus, the packet data transmitted from a predetermined communication partner to the MN 10 is sent through the AR 21 and the AP 23 to the MN 10 on the basis of the CoA of the MN 10, while the packet data transmitted from the MN 10 to a desired communication counterpart is communicated through the AP 23 and the AR 21 to the aforesaid desired communication partner. Moreover, on the basis of the CoA of the MN 10 registered in a home agent, the packet data addressed to the MN 10 transmitted to the home network is also sent to the AR 21 of the subnet 20 and communicated through the AP 23 to the MN 10.

As described above, in the radio communication system using the mobile IPv6 shown in FIG. 9, even in a case in which the MN 10 makes the handover from one subnet to a different subnet, the employment of the CoA enables the radio communication of the MN 10 to continue. As a technique for achieving the speeding-up of this handover processing, for example, there has been known a fast handover technique disclosed in the following Non-Patent Document 2.

According to this fast handover technique, before the MN 10 carries out the L2 handover, the MN 10 can previously acquire a new CoA (hereinafter referred to as NCoA) to be used in the subnet 30 to generate a tunnel between the AR 21 and the AR 31 when the NCoA is notified to the AR 21, and the MN 10 shifts to the subnet 30 after carrying out the L2 handover for conducting the connection switching from the AP 23 to the AP 32 and, even for the duration until the previously acquired NCoA is registered (BU) formally, the packet data sent to an old (Previous) CoA (hereinafter referred to as PCoA) of the MN 10, which has been used in the subnet 20, is transferred by way of the tunnel and through the AR 31 and the AP 32 to the MN 10, and the packet data transmitted from the MN 10 arrives at the AR 21 by way of the tunnel and through the AP 32 and the AR 31 and it is transmitted from the AR 21 to a communication partner:

On the other hand, in a communication using a network, a service including a QoS (Quality of Service) assurance (in this specification, such a service will be referred to as an additional service) exists and various types of communication protocols exists for realizing such an additional service. Of these various types of communication protocols, as a protocol for the QoS assurance, for example, there exists an RSVP (Resource Reservation Protocol) (for example, see the following Non-Patent Document 3). The RSVP is for making a band reservation on a path (flow) from a transmission side communication terminal, which conducts data transmission, to a reception side communication terminal, which makes data reception, so that data is smoothly transmitted from the transmission side communication terminal to the reception side communication terminal.

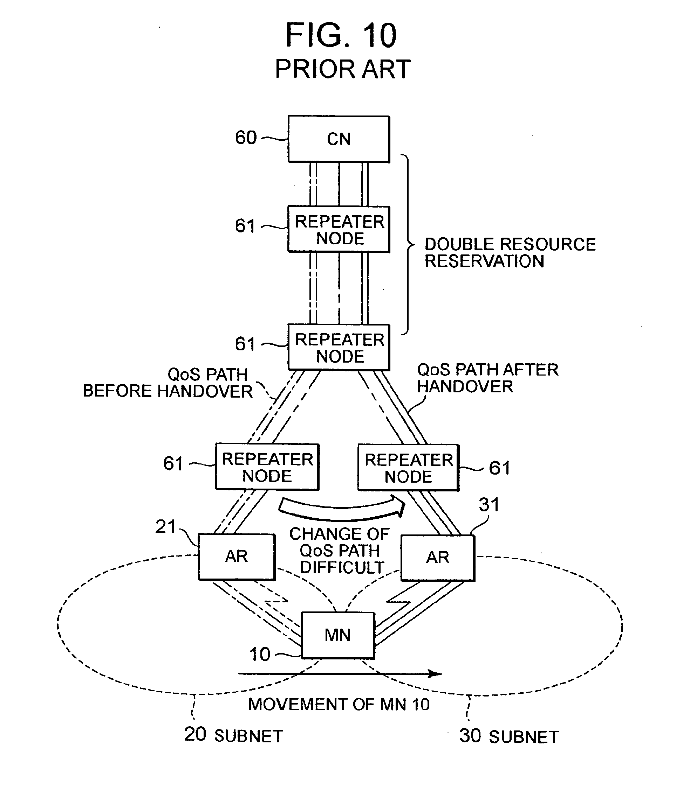

Although there is a need for the MN 10 which carries out the handover between the subnets 20 and 30 to, even after the handover, uninterruptedly receive an additional service including a QoS assurance which has received before the handover, the above-mentioned RSVP cannot satisfy the foregoing requirements particularly in the following points and cannot cope with the movement of the MN 10. FIG. 10 is an illustrative view for explaining the fact that an RSVP according to a conventional technique cannot cope with the movement of an MN.

In the RSVP, a QoS path is set in a path between two points (end-to-end path) from a communication partner terminal (CN: Correspondent Node) 60 relative to the MN 10, and data transfer is made through the use of a plurality of repeater nodes 61, which make connections for the end-to-end path, on the basis of the addresses of the MN 10 and the CN 60. Therefore, for example, in a case in which the MN 10 conducts the handover between the subnets 20 and 30 and the CoA of the MN 10 is changed, although there is a need to, in the QoS path, carry out the processing related to an address change in addition to a flow change, the RSVP cannot handle such changes, which consequently breaks the QoS assurance (first problem: difficulty is experienced in changing the QoS path). Moreover, even in a case in which a QoS path is newly set, if an overlapping portion occurs between the QoS paths before and after the handover, there is a possibility that a double resource reservation (double reservation) arises in this overlapping portion (second problem: double resource reservation).

For solving the above-mentioned problems, at present, in the IETF (Internet Engineering Task Force), a discussion has been made for the purpose of standardizing a new protocol referred to as an NSIS (Next Step in Signaling) (see the following Non-Patent Document 4). This NSIS is expected to be particularly effective to various types of additional services including a QoS assurance in mobile environments and, with respect to the NSIS, there are documents (for example, see the following Non-Patent Documents 5 to 9) which describe the requirements for realizing a QoS assurance and mobility supports, realization methods, and others. A description will be given hereinbelow of the outline of the NSIS which is presently a draft specification in an NSIS working group of the IETF, and a method of establishing a QoS path (see Non-Patent Document 6 and Non-Patent Document 9).

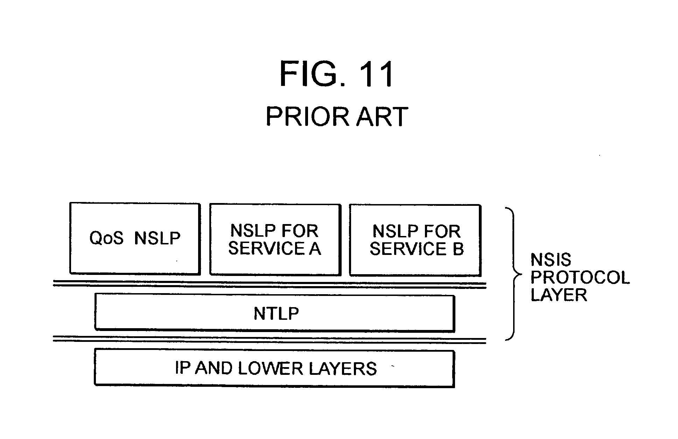

FIG. 11 shows an NSIS and a lower protocol stack relative thereto for explaining a protocol arrangement of the NSIS according to a conventional technique. An NSIS protocol layer is positioned immediately above IP and lower layers. Moreover, the NSIS protocol layer is composed of two layers: an NSLP (NSIS Signaling Layer Protocol) which is a protocol for generating a signaling message to offer each additional service and for conducting the processing therefor, and an NTLP (NSIS Transport Layer Protocol) for carrying out the routing on a signaling message of the NSLP. As the NSLPs, there are various NSLPs such as an NSLP (QoS NSLP) for QoS, an NSLP (NSLP for a service A, NSLP for a service B) for one different additional service (service A or service B), and others.

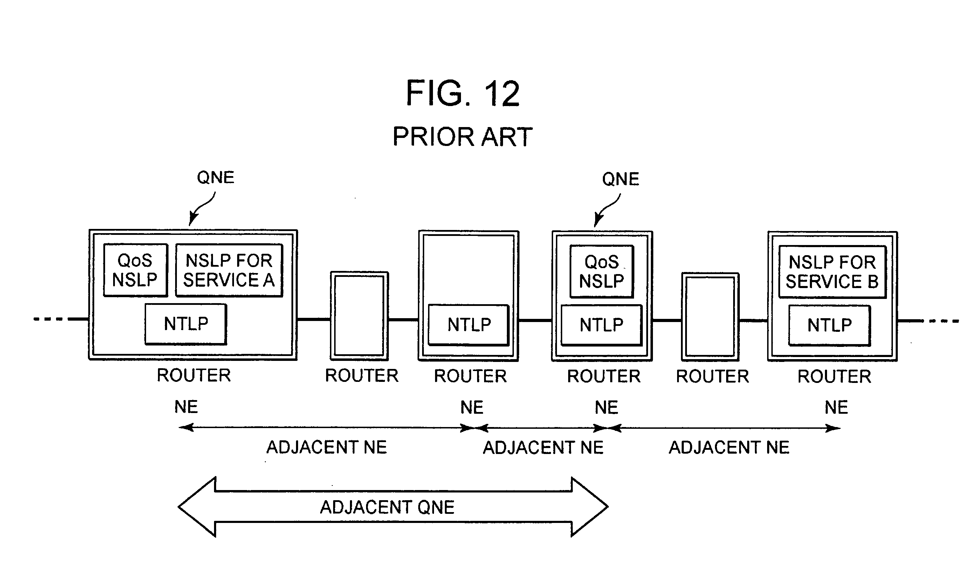

Moreover, FIG. 12 is an illustrative view for explaining the concept that NEs or QNEs which are nodes of the NSIS according to a conventional technique "adjacent". As shown in FIG. 12, at least an NTLP is mounted in each of all the nodes (NE: NSIS Entity) having an NSIS function. There is no need to always place an NSLP on the NTLP, and it is also acceptable that one or more NSLPs exist. In this case, an NE having an NSLP for QoS will be particularly referred to as a QNE (QoS NSIS Entity). A device capable of becoming an NE is a terminal or a router. Still moreover, a plurality of router but NE can exist between the adjacent NEs, and pluralities of routers, but NE, and NEs, each of which does not have a QoS NSLP, can exist between the adjacent QNEs.

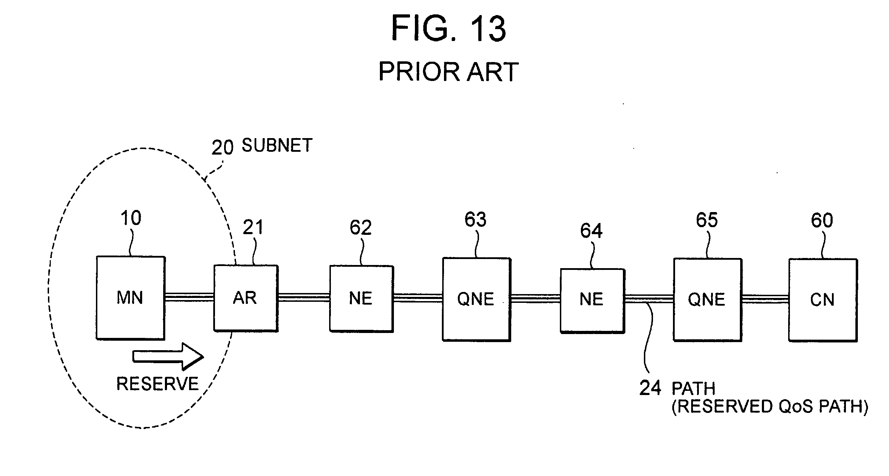

With reference to FIG. 13, a description will be given hereinbelow of one example of a conventional QoS path establishing method. Let it be assumed that the MN 10 connected to the AR 21 in the subnet 20 is scheduled to receive data from an CN 60 or is receiving it therefrom (in reception). When establishing a QoS path (path 24), the MN 10 transmits a RESERVE message for the establishment of the QoS path toward the CN 60. The RESERVE message includes information (QSpec) on a desired QoS for the data reception from the CN 60. The transmitted RESERVE message passes through an AR 21, an NE 62 and a different router, which does not have an NSIS function, and arrives at a QNE 63. The NSLP of the QNE 63 reserves a QoS resource, described in a QSpec included in the RESERVE message, for this session. The RESERVE message after passing through the QNE 63 reaches a QNE 65 by way of an NE 64 and a different router which does not have an NSIS function. Also in the QNE 65, the processing is conducted as in the case of the QNE 63 so as to reserve a QoS resource. This operation is repeated and the RESERVE message is finally delivered to the CN 60, thereby establishing a QoS path between the MN 10 and the CN 60.

In addition, a flow identifier and a session identifier are used for identifying the resource reservation. The flow identifier depends upon the CoA of the MN 10 or the IP address of the CN 60, and each of the QNEs 63 and 65 can confirm the IP address of the source/destination of each data packet so as to learn the presence or absence of the resource reservation with respect to this data packet. In this connection, in a case in which the MN 10 moves to a different subnet so that the CoA changes, a flow identifier changes according to the change of the CoA of the MN 10. On the other hand, the session identifier is for identifying a series of data transmission for a session, and it does not change according to the movement of a terminal unlike the flow identifier.

Still additionally, as a method of examining the possibility of acquisition of a QoA resource with respect to an arbitrary path, there is a method referred to as QUERY. This method is, for example, a method of, when the MN 10 establishes a QoS path with respect to the CN 60, previously making an examination as to whether or not a desired QSpec can make a reservation in each QNE, and a QUERY message is transmitted for examining whether or not a desired QSpec can make a reservation in each QNE and the result thereof is receivable by a RESERVE message which is an response to the QUERY message. The present resource reservation state is not changed by these QUERY and RESERVE messages at all. Moreover, when a QNE makes some notification to a different QNE, a NOTIFY message is available. For example, this NOTIFY message is used for the error notification or the like. Each of the above-mentioned RESERVE, QUERY, RESPONSE and NOTIFY messages is an NSLP message for the QoS assurance and is written in the Non-Patent Document 6.

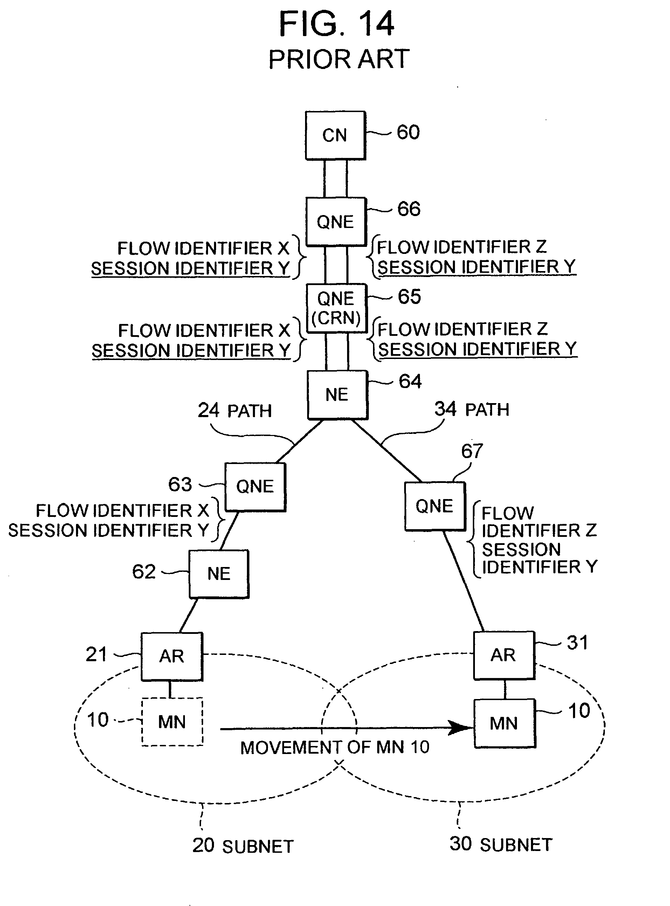

Furthermore, referring to FIG. 14, a description will be given of a method according to a conventional technique, which is for avoiding a double resource reservation when the MN 10 moves from the subnet 20 to the subnet 30. When the MN 10 is receiving data from the CN 60 and a QoS path (path 24) is established, a QoS resource desired by the MN 10 is reserved in a QNE 63, a QNE 65 and a QNE 66. At this time, a flow identifier and a session identifier are taken as X and Y, respectively. In fact, as mentioned above, the flow identifier X includes the present IP address of the MN 10 and the IP address of the CN 60, while a sufficiently large arbitrary numeric value is set in the session identifier Y. In this state, after moving to the subnet 30, the MN 10 sends a RESERVE message to the CN 60 for establishing a new QoS path. Incidentally, the old path (path 24) is not released immediately after the movement of the MN 10.

Since the flow identifier changes according to the movement of the MN 10 as mentioned above, the flow identifier X in the path 24 and the flow identifier in the path 34 (the flow identifier in this path 34 is taken as Z) differ from each other. Since a QNE 67 does not have a resource reservation for the session identifier Y in all interfaces, a decision is made that a new path is established, and a resource reservation is made with respect to the flow identifier Z and the session identifier Y. On the other hand, a resource reservation with respect to the session identifier Y exists in the QNE 65 and the QNE 66. Each of the QNE 65 and the QNE 66 makes a comparison on the flow identifier and confirms the change of the flow identifier from X to Z and makes a decision that a new path is established due to the movement of the MN 10 so as to, for avoiding the double resource reservation, take a measure such as updating the old reservation without reserving a resource newly. The QNE at which the old path and the newpath starts to intersect with each other is referred to as a CRN (Crossover node). Although the CRN sometimes signifies a router (NE 64 in FIG. 14) at which the paths actually start to intersect with each other, in the case of a discussion on the QoS path, the CRN signifies a QNE (QNE 65 in FIG. 14) having a state that, in the old path (path 24) and the new path (path 34), one adjacent QNE (QNE 66 in FIG. 14) is the same while the other adjacent QNE (QNE 63 or QNE 67 in FIG. 14) varies.

Furthermore, according to the Non-Patent Document 6 or the Non-Patent Document 9, with respect to these RESERVE message, QUERY message and NOTIFY message, in addition to an end terminal (MN 10 or CN 60) which forms the source or destination of the packet data, an arbitrary QNE can become the source.

Although the NSIS covers various functions in normal static networks in addition to mobile environments, in this specification, taking note of a function to realize the establishment of a mobility-supported additional service which is one of the functions of the NSIS, the establishment of a mobility-supported additional service is realized by mounting the NSIS.
Non-Patent Document 1 : D. Johnson, C. Perkins and J. Arkko, "Mobility Support in IPv6", draft-ietf-mobileip-ipv6-24, June 2003
Non-Patent Document 2 : Rajeev Koodli "Fast Handovers for Mobile IPv6", draft-ietf-mobileip-fast-mipv6-08, October 2003
Non-Patent Document 3 : R. Braden, L. Zhang, S. Berson, S. Herzog and S. Jamin, "Resource ReSerVation Protocol-Version 1 Functional Specification", RFC 2205, September 1997
Non-Patent Document 4 : NSIS WG (http://www.ietf.org/html.charters/nsis-charter.html)
Non-Patent Document 5 : H. Chaskar, Ed, "Requirements of a Quality of Service (QoS) Solution for Mobile IP", RFC3583, September 2003
Non-Patent Document 6 : Sven Van den Bosch, Georgios Karagiannis and Andrew McDonald "NSLP for Quality-of Service signalling", draft-ietf-nsis-qos-nslp-01.txt, October 2003
Non-Patent Document 7 : X. Fu, H. Schulzrinne, H. Tschofenig, "Mobility issues in Next Step signaling, draft-fu-nsis-mobility-01.txt, October 2003
Non-Patent Document 8 : Roland Bless, et. Al., "Mobility and Internet Signaling Protocol", draft-manyfolks-signaling-protocol-mobility-00.txt, January 2004
Non-Patent Document 9 : R. Hancock (editor), "Next Steps in Signaling: Framework", draft-ietf-nsis-fw-05.txt, October 2003

In FIG. 14, for example, we see about a situation that the MN 10 accepting a QoS assurance in the subnet 20 to which it has made a connection before the handover carries out the handover to the subnet 30 and continuously receives the QoS assurance, it has received before the handover, in the subnet 30 to which it makes a connection after the handover.

In this case, the time to be taken from when the MN 10 hands off the subnet 20 connected before the handover until the MN 10 comes into a state accepting an additional service (in this case, QoS assurance) in the subnet 30 connected after the handover is a period of time for which the MN 10 cannot accept the QoS assurance, and the MN 10 cannot accept the QoS assurance at all, or the default QoS transfer processing consequently takes place, which breaks the QoS.

Accordingly, as mentioned above, there is a need to promptly offer the QoS assurance to the MN 10 after the handover. For solving this, in the present discussion (for example, Non-Patent Document 7) on the NSIS in the IETF, for example, there exist the proposals to the effect that some preparation is required in order to establish a new QoS path before the MN 10 conducts the handover or before the MN 10 terminates the handover, and that there is a need to establish a new QoS path in advance. However, although these proposals are merely made, a concrete realization method is not disclosed at all. Moreover, although there is a need to previously find the aforesaid CRN as a preparation for establishing a new path, a concrete realization method is not disclosed with respect to this point.

In addition, as another problem, we see about a case in which, when a QoS resource reservation for the communication from the MN 10 to the CN 60 exists on the path 24, for example, the MN shifts to the subnet 30 where it carries out QUERY with respect to the CN 60. In this case, since, as mentioned above, the resource reservation for the communication between the MN 10 and the CN 60 on the path 24 is not released for some time after the movement of the MN 10, the resource reservation for the communication between the MN 10 and the CN 60 on the path 24 is left for some time in the QNE 65 and the QNE 66. Difficulty is experienced in returning it as a free resource to the MN 10 (using for a new path after the movement of the MN 10), which consequently makes it difficult for the MN 10 to accurately obtain vacancy information on the resource. This problem also applies to not only the case in which the MN 10 after the movement issues a request through a QUERY message but also a case in which, for example, an arbitrary QNE (for example, QNE 67) on the path 34 transmits a request through the QUERY message.

### DISCLOSURE OF THE INVENTION

In consideration of the above-mentioned problems, it is an object of the present invention to provide a communication handover method, communication message processing method and program for executing these methods by the use of a computer, which enable a mobile terminal, which conducts handover, to promptly and continuously accept an additional service, the mobile terminal has accepted before the handover, after the handover.

For achieving the above-mentioned purpose, a communication handover method according to the present invention for a mobile terminal so arranged as to, in a communication system in which a plurality of access routers each constituting a subnet are connected through a communication network and at least one access point forming a unique communicable area is connected to each of the plurality of access routers, make a communication with the access router, to which the access point is connected, through a radio communication with the access point in the communicable area, comprises:
a reception step of, when the mobile terminal makes communication switching from an access point which is presently in communication to a different access point, receiving information on the different access point from the different access point,
an information acquiring step of, when the communication switching is made to the different access point, acquiring information on a router capable of making a preparation related to an additional service, the mobile terminal desires, after the communication switching on the basis of the information on the different access point received in the reception step, and
an information transmitting step of generating a message including information on the additional service presently in acceptance during the communication and, on the basis of the information on the router capable of making the preparation related to the additional service after the communication switching, sending the message through the access point, which is presently in communication, to the router capable of making the preparation related to the additional service after the communication switching.
With the above-mentioned arrangement, before the mobile terminal carries out the communication switching between the access points, the processing is conducted so as to continuously accept the additional service currently in acceptance (before the communication switching) even after the communication switching, so the mobile terminal, which carries out the handover, can continuously and promptly accept the additional service, the mobile terminal has accepted before the handover, after the handover.

In addition to the above-mentioned arrangement, the communication handover method according to the present invention comprises a storage step in which the mobile terminal stores, in predetermined information storing means of the mobile terminal, correspondence information describing correspondence relationship between the information on the access point and the information on the router capable of making the preparation related to the additional service after the communication switching.
With the aforesaid arrangement, the mobile terminal can hold the information on the router capable of making the preparation related to the additional service after the communication switching in a state associated with the information on the access point.

In addition to the above-mentioned arrangement, the communication handover method according to the present invention is so arranged that, in the aforesaid information acquiring step, the information on the router capable of making the preparation related to the additional service after the communication switching and associated with the information on the different access point is acquired from the correspondence information on the basis of the information on the different access point received in the reception step.
With the above-mentioned arrangement, when the information becomes receivable from an access point different from the access point currently in communication, on the basis of the received access point information, it is possible to find an optimum router for making the preparation related to the additional service after the communication switching.

Furthermore, for achieving the above-mentioned purpose, a communication handover method according to the present invention for a mobile terminal so arranged as to, in a communication system in which a plurality of access routers each constituting a subnet are connected through a communication network and at least one access point forming a unique communicable area is connected to each of the plurality of access routers, make a communication with the access router, to which the access point is connected, through a radio communication with the access point in the communicable area, comprises:
a reception step of, when the mobile terminal makes communication switching from an access point which is presently in communication to a different access point, receiving information on the different access point from the different access point, and
an information transmitting step of generating a message including the information on the different access point received in the reception step and information on an additional service presently in acceptance during the communication and, on the basis of the information on the access point, transmitting the message through the access point presently in communication to a predetermined server capable of acquiring information on a router capable of, when communication switching is made to the different access point, making a preparation related to the additional service, the mobile terminal desires, after the communication switching.
With the above-mentioned arrangement, the mobile terminal offers the information on the additional service currently in acceptance to the predetermined server capable of acquiring the information on the router capable of making the preparation related to the additional service after the communication switching, which enables the processing for continuously receiving the additional service currently in reception after the access point communication switching so that the mobile terminal, which carries out the handover, can promptly and continuously receive the additional service, which has been received before the handover, after the handover.

Furthermore, for achieving the above-mentioned purpose, a communication handover method according to the present invention for a mobile terminal so arranged as to, in a communication system in which a plurality of access routers each constituting a subnet are connected through a communication network and at least one access point forming a unique communicable area is connected to each of the plurality of access routers, make a communication with the access router, to which the access point is connected, through a radio communication with the access point in the communicable area, comprises:
an information transmitting step of generating a message including the information on an additional service presently in acceptance during the communication and, when the mobile terminal carries out communication switching from an access point presently in communication to a different access point, transmitting the message through the access point presently in communication to all predetermined routers each capable of realizing the additional service after the communication switching and selected by the mobile terminal.
With the above-mentioned arrangement, for example, a message including the information on the additional service presently in reception during the communication is transmitted to a predetermined router having a function to realize the additional service the mobile terminal grasps in advance, thereby conducting the processing for continuously receiving the additional service currently in acceptance after the access point communication switching so that the mobile terminal, which carries out the handover, can promptly and continuously accept the additional service which has been accepted before the handover.

In addition to the above-mentioned arrangement, the communication handover method according to the present invention further comprises:
a step in which the mobile terminal specifies an access router having the different access point as a following on the basis of the information on the different access point received in the reception step,
a step of acquiring information on the access router having the different access point as a following, and
an address generating step of generating address information available in the subnet, to which the access router pertains, on the basis of the information on the access router having the different access point as a following.
With the above-mentioned arrangement, the mobile terminal can carries out the stateless automatic setting of the address information.

Moreover, in addition to the above-mentioned arrangement, in the communication handover method according to the present invention, in the information transmitting step, the message is transmitted in a state where the address information generated in the address generating step is included in the message.
With the above-mentioned arrangement, the mobile terminal can transmit, as one message, the information on the additional service currently in reception during the communication and the address information generated by the stateless automatic setting.

Still moreover, in addition to the above-mentioned arrangement, in the communication handover method according to the present invention, the additional service is a QoS assurance.
With the above-mentioned arrangement, also after the handover, the mobile terminal, which carries out the handover, can promptly and continuously accept the QoS assurance that has been accepted before the handover.

Yet moreover, according to the present invention, there is provided a communication handover program for executing the above-described communication handover methods through the use of a computer.

Furthermore, for achieving the above-mentioned purpose, a communication message processing method according to the present invention for a router provided in a communication system so arranged that a plurality of access routers each constituting a subnet are connected through a communication network and at least one access point forming a unique communicable area is connected to each of the plurality of access routers and a mobile terminal existing in the communicable area makes a communication with the access router, to which the access point is connected, through a radio communication with the access point, with the router being capable of making a preparation related to an additional service, the mobile terminal desires, after communication switching when the mobile terminal switches the communication with the access point, comprises:
a first information receiving step of receiving, from the mobile terminal, a message including information on the additional service the mobile terminal presently accepts during the communication,
a step of generating a message for a preparation of the additional service on the basis of the information on the additional service,
a terminal specifying step of specifying a partner terminal, with which the mobile terminal presently makes a communication, on the basis of the information on the additional service the mobile terminal presently accepts during the communication,
an information transmitting step of generating a message for acquiring information, which enables the preparation related to the additional service after the communication switching, on the basis of the information on the additional service the mobile terminal presently accepts during the communication, and transmitting the message to the partner terminal, and
a second information receiving step of receiving a message including the information, which enables the preparation related to the additional service after the communication switching, from the partner terminal or from an arbitrary node lying on a path of the message to the partner terminal.
The above-mentioned arrangement enables the processing to be conducted before the mobile terminal carries out the access point communication switching, for continuously receiving the additional service currently in acceptance (before the communication switching) after the access point communication switching so that the mobile terminal, which carries out the handover, can promptly and continuously accept the additional service, the mobile terminal has accepted before the handover, the handover.

Still furthermore, in addition to the above-mentioned arrangement, the communication message processing method according to the present invention comprises a storage step of storing the information, which enables the preparation related to the additional service after the communication switching, received from the partner terminal or from the arbitrary node lying on the path of the message to the partner terminal in the second information receiving step.
With the above-mentioned arrangement, the router which has received the message including the information on the additional service, the mobile terminal presently accepts during the communication, from the mobile terminal can grasp the information on a path leading to the partner terminal and preserve this information.

Yet furthermore, in addition to the above-mentioned arrangement, the communication message processing method according to the present invention comprises a step of generating a message including the information, which enables the preparation related to the additional service after the communication switching, received from the partner terminal in the second information receiving step to transmit the message to the mobile terminal.
With the above-mentioned arrangement, the router which has received the message including the information on the additional service, the mobile terminal presently accepts during the communication, from the mobile terminal can acquire the information which enables the preparation related to the additional service after the communication switching, and then notify it to the mobile terminal.

Moreover, in addition to the above-mentioned arrangement, the communication message processing method according to the present invention comprises a step of verifying the validity of the address information when address information usable by the mobile terminal in the subnet, to which the access router pertains, is included in the message received from the mobile terminal, which does not exist in the subnet to which the access router pertains, in the first information receiving step, and
a step of, when the validity of the address information is grasped, previously establishing a path for the additional service, the mobile terminal accepts after the communication switching, on the basis of the address information. With the above-mentioned arrangement, the establishment of the path for the additional service requires the address information on the mobile terminal and, for example, when the validity of the address information generated through the stateless automatic setting is grasped by the mobile terminal, it is possible to previously establish a path for the additional service related to the mobile terminal.

In addition, for achieving the above-mentioned purpose, a communication message processing method according to the present invention for a node or a router provided in a communication system so arranged that a plurality of access routers each constituting a subnet are connected through a communication network and at least one access point forming a unique communicable area is connected to each of the plurality of access routers and a mobile terminal existing in the communicable area makes a communication with the access router, to which the access point is connected, through a radio communication with the access point, and made to constitute a path related to an additional service when the mobile terminal makes a communication with a predetermined communication terminal, comprises:
a reservation judging step of, upon receipt of a message including a flow identifier and a session identifier, related to a predetermined path, for checking whether the predetermined path is set or not, making a judgment as to whether or not a resource reservation is made with respect to the flow identifier and the session identifier included in the message, and
a step of transmitting a message including a result of the judgment in the reservation judgment step to a source or destination of the message for checking whether the predetermined path is set or not.
With the above-mentioned arrangement, upon receipt of the message including the flow identifier and the session identifier related to the predetermined path for checking whether the predetermined path is set or not, the node or the router can make a judgment as to whether a resource reservation is made with respect to the flow identifier and the session identifier, so as to return a result thereof to a predetermined source or destination related to the message.

Still additionally, for achieving the above-mentioned purpose, a communication message processing method according to the present invention for a node or a router provided in a communication system so arranged that a plurality of access routers each constituting a subnet are connected through a communication network and at least one access point forming a unique communicable area is connected to each of the plurality of access routers and a mobile terminal existing in the communicable area makes a communication with the access router, to which the access point is connected, through a radio communication with the access point, and made to constitute a path related to an additional service when the mobile terminal makes a communication with a predetermined communication terminal, comprises:
a reservation judging step of, upon receipt of a message including a flow identifier and a session identifier, related to a predetermined path, for checking whether the predetermined path is set or not, making a judgment as to whether or not a resource reservation is made with respect to the flow identifier and the session identifier included in the message, and
a transfer step of, when a judgment in the reservation judging step shows that the resource reservation is made with respect to said flow identifier and said session identifier included in said message, adding address information on an interface used for the resource reservation to a predetermined portion of the message and transferring the message.
With the above-mentioned arrangement, it is possible that the node or the router, which has received the message including the flow identifier and the session identifier, related to the predetermined path, for checking whether the predetermined path is set or not, makes a decision as to whether or not a resource reservation has been made with respect to the flow identifier and the session identifier and, if the resource reservation has taken place, inserts the address information on its own interface related to the resource reservation into the message and transfers this message, which enables specifying the node or the route, which has the resource reservation on the path, for example, by referring to the contents of the message.

Yet additionally, in addition to the above-mentioned arrangement, in the communication message processing method according to the present invention, the predetermined portion indicates an adding sequence of the interface address information.
The above-mentioned arrangement enables the disposition of the nodes or the routers in the path to be estimated from the adding sequence of the interface addresses.

Moreover, for achieving the above-mentioned purpose, a communication message processing method according to the present invention for a communication node designed to, in a communication system in which a plurality of access routers each constituting a subnet are connected through a communication network and at least one access point forming a unique communicable area is connected to each of the plurality of access routers, make a communication with a mobile terminal so arranged as to make a communication with the access router connected to the access point through a radio communication with the access point in the communicable area and designed to be capable of establishing a path related to an additional service when making a communication with the mobile terminal, comprises:
a step of, upon receipt of a message including a flow identifier and a session identifier, related to a predetermined path, for seeking the predetermined path, generating a new message including a result of the seeking of the predetermined path in the message to transmit the new message as a response to the message.
The above-mentioned arrangement enables the message for seeking the path for the additional service established, for example, between the mobile terminal and a partner terminal to be transmitted to the partner terminal so that a message including a seek result the message collects is returned as a response.

Still moreover, in addition to the above-mentioned arrangement, in the communication message processing method, the message for checking whether the predetermined path is set or not, or the message for seeking the predetermined path is a QUERY message or a RESPONSE message having an area capable of including a flow identifier and a session identifier which are related to the path.
This enables the information on the predetermined path to be acquired through single transmission/reception of the message by the use of the QUERY message and the RESPONSE message existing so far.

Yet moreover, in addition to the above-mentioned arrangement, in the communication message processing method, the message for checking whether the predetermined path is set or not, or the message for seeking the predetermined path has an area capable of including information on a free resource.
The above-mentioned arrangement enables grasping the information on a free resource (for example, release situation of a resource) and others through the aforesaid message.

In addition, a communication message processing method according to the present invention for a node or a router provided in a communication system so arranged that a plurality of access routers each constituting a subnet are connected through a communication network and at least one access point forming a unique communicable area is connected to each of the plurality of access routers and a mobile terminal existing in the communicable area makes a communication with the access router, to which the access point is connected, through a radio communication with the access point, and made to constitute a path related to an additional service when the mobile terminal makes a communication with a predetermined communication terminal, comprises:
a reservation judging step of, upon receipt of a message including a session identifier related to a predetermined path for checking whether the predetermined path is set or not, making a judgment as to whether or not a state exists with respect to the session identifier, and
a transmission step of, when the reservation judging step shows that the state does not exist with respect to the session identifier, transmitting the message to the predetermined communication terminal.
With the above-mentioned arrangement, the mobile terminal transmits, in a direction of a partner terminal, the message for seeking the path for the additional service established between the mobile terminal and the partner terminal, and this message does not reach the partner terminal and the detection of a crossover node becomes feasible, thus enabling the detection of the crossover node more promptly.

Still additionally, a communication message processing method according to the present invention for a node or a router provided in a communication system so arranged that a plurality of access routers each constituting a subnet are connected through a communication network and at least one access point forming a unique communicable area is connected to each of the plurality of access routers and a mobile terminal existing in the communicable area makes a communication with the access router, to which the access point is connected, through a radio communication with the access point, and made to constitute a path related to an additional service when the mobile terminal makes a communication with a predetermined communication terminal, comprises:
a reservation judging step of, upon receipt of a message including a session identifier related to a predetermined path for checking whether the predetermined path is set or not, making a judgment as to whether or not a state exists with respect to the session identifier,
a reservation judging step of, upon receipt of a message including identification information for specifying a flow and a session identifier related to a predetermined path for checking whether the predetermined path is set or not, making a judgment as to whether or not a state exists with respect to the flow specifying identification information, and
a judgment step of, when the reservation judging step shows that the state exists with respect to the session identifier, making a judgment as to whether or not a different adjacent node or router is specified in each of the state and the message, and
a CRN judging step of, when the judgment step shows that the adjacent node or router is specified, making a judgment that it is a crossover node.
With the above-mentioned arrangement, the mobile terminal transmits, in a direction of a partner terminal, the message for seeking the path for the additional service established between the mobile terminal and the partner terminal, and this message does not reach the partner terminal and the detection of a crossover node becomes feasible, thus enabling the detection of the crossover node more promptly.

Yet additionally, in addition to the above-mentioned arrangement, the communication message processing method comprises a notification step of, when the CRN judging step shows that it is a crossover node, issuing a notification to the effect that it is a crossover node, to a predetermined node.
With the above-mentioned arrangement, a notification on a crossover point can be made to, for example, a node functioning as a proxy or the like.

Moreover, in addition to the above-mentioned arrangement, the communication message processing method comprises a step of, in a state where the node or the router constituting the path related to the additional service has a flow identification list for storing the correspondence relationship between each resource and information for specifying a flow, adding or deleting the flow specifying information on the path related to the additional service, which goes through it, to or from the flow identification list.
With the above-mentioned arrangement, the node or the router which is a component of the path related to the additional service can grasp the correspondence relationship between the resource and the information for specifying the flow.

Still moreover, in addition to the above-mentioned arrangement, the communication message processing method comprises an updating step of, when the CRN judging step shows that it is a crossover node, transmitting, to the communication terminal, a message for adding information, which is for specifying a new flow, to the flow identification list in which the resource for the predetermined path is allocated with respect to each receiving node or router.
The above-mentioned arrangement enables promptly carrying out a change of a resource allocation at an overlapping portion between the new and old paths, two in number.

Yet moreover, according to the present invention, there is provided a communication message processing program for executing the above-mentioned communication handover methods through the use of a computer.

The present invention provides the communication handover methods, communication message processing methods and programs for executing these methods through the use of a computer, which have the arrangements described above, and provides an effect that a CRN is found in advance (before the handover or immediately after the handover) so that, even after the handover, a mobile terminal which carries out the handover can promptly and continuously accept an additional service it has accepted before the handover. In addition, in a case in which a terminal which has conducted the handover or an agency router (proxy) for a terminal in movement carries out QUERY for acquiring information on a newpath, it is possible to return correct information while considering a resource reservation situation before the movement of an MN between a CRN and a CN.

### BRIEF DESCRIPTION OF THE DRAWINGS

FIG. 1 is an illustrative view showing a configuration of a communication system according to an embodiment of the present invention;
FIG. 2 is a block diagram showing a configuration of an MN in an embodiment of the present invention;
FIG. 3 is a block diagram showing a configuration of a proxy in an embodiment of the present invention;
FIG. 4 is a block diagram showing a configuration of a QNE in an embodiment of the present invention;
FIG. 5 is a block diagram showing a configuration of a CN in an embodiment of the present invention;
FIG. 6 is an illustrative view showing one example in which information processed by a QNE is to be stored in a message to be transmitted/received by a proxy and a CN in an embodiment of the present invention;
FIG. 7 is a first sequence chart showing, in a communication system according to a communication system according to an embodiment of the present invention, in a case in which an MN makes a request to a proxy for a preparation of establishment of a QoS path, one example of an operation to be conducted at the preparation;
FIG. 8 is a second sequence chart showing, in a communication system according to a communication system according to an embodiment of the present invention, in a case in which an MN makes a request to a proxy for a preparation of establishment of a QoS path, one example of an operation to be conducted at the preparation;
FIG. 9 is an illustrative view showing a configuration of a radio communication system common to the present invention and a conventional technique;
FIG. 10 is an illustrative view for explaining the fact that an RSVP according to a conventional technique cannot cope with the movement of an MN;
FIG. 11 is an illustrative view for explaining a protocol arrangement of an NSIS according to a conventional technique;
FIG. 12 is an illustrative view for explaining the concept of "adjacent" of an NE or QNE which is a node of an NSIS according to a conventional technique;
FIG. 13 is an illustrative view showing a method of carrying out a QoS resource reservation in an NSIS according to a conventional technique;
FIG. 14 is an illustrative view for explaining a method of avoiding a double resource reservation in an NSIS according to a conventional technique;
FIG. 15 is an illustrative view showing one example of proxy information to be stored in an MN according to an embodiment of the present invention;
FIG. 16 is an illustrative view showing one example of AP-AR correspondence information to be stored in an MN according to an embodiment of the present invention;
FIG. 17 is a sequence chart showing, in a communication system according to an embodiment of the present invention, one example of an operation in a case in which an MN makes a request to a proxy for a preparation of establishment of a QoS path and an RESPONSE message used in a conventional NSIS is used as a message for use in the preparation;
FIG. 18 is a sequence chart showing, in a communication system according to an embodiment of the present invention, one example of an operation in a case in which an MN makes a request to a proxy for a preparation of establishment of a QoS path and an RESPONSE message used in a conventional NSIS is used as a message for use in the preparation;
FIG. 19 is a block diagram showing a configuration of a proxy for realizing a different processing method after the reception of a message C according to an embodiment of the present invention;
FIG. 20 is a block diagram showing a configuration of an CN for realizing a different processing method after the reception of a message B according to an embodiment of the present invention;
FIG. 21 is a sequence chart showing, in a communication system according to an embodiment of the present invention, one example of an operation to be conducted in a case in which a proxy makes a request to a CRN for the establishment of a QoS path;
FIG. 22 is a first sequence chart showing, in a communication system according to an embodiment of the present invention, in a case in which an MN makes a request to a proxy for a preparation of establishment of a QoS path, one example of an operation to be conducted at the preparation;
FIG. 23 is a second sequence chart showing, in a communication system according to an embodiment of the present invention, in a case in which an MN makes a request to a proxy for a preparation of establishment of a QoS path, one example of an operation to be conducted at the preparation;
FIG. 24 is a sequence chart showing one example of an operation in a case in which an MN finds an CRN without sending a message to a CN; and
FIG. 25 is a flow chart showing, in a communication system according to an embodiment of the present invention, one example of a method of making a judgment as to whether or not a QNE itself, which has received a message, is a CRN.

### BEST MODE FOR CARRYING OUT THE INVENTION

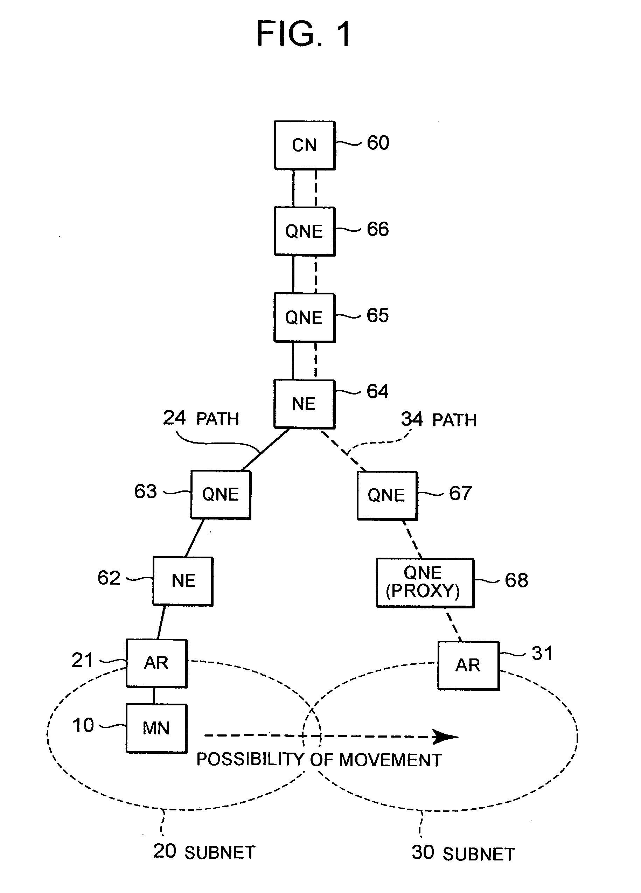

Embodiments of the present invention will be described hereinbelow with reference to FIGs. 1 to 8, 15 and 16. FIG. 1 is an illustrative view showing a configuration of a communication system according to an embodiment of the present invention. In FIG. 1, a QoS path (path 24) established with respect to a CN 60 is shown by a solid line in a state where an MN 10 is connected to a subnet 20 before handover. On this path 24, there exist an AR 21, an NE 62, a QNE 63, an NE 64, a QNE 65 and a QNE 66 in a direction from the MN 10 to the CN 60. Likewise, in a case in which the MN 10 makes a connection to a subnet 30 after the handover, a QoS path (path 34) established with respect to the CN 60 is shown by a dotted line. On the path 34, there lie an AR 31, a QNE (proxy) 68, a QNE 67, an NE 64, a QNE 65 and a QNE 66 in a direction from the MN 10 to the CN 60. Therefore, the QNE (CRN) at which the old path (path 24) and the new path (path 34) intersect with each other is the QNE 65.

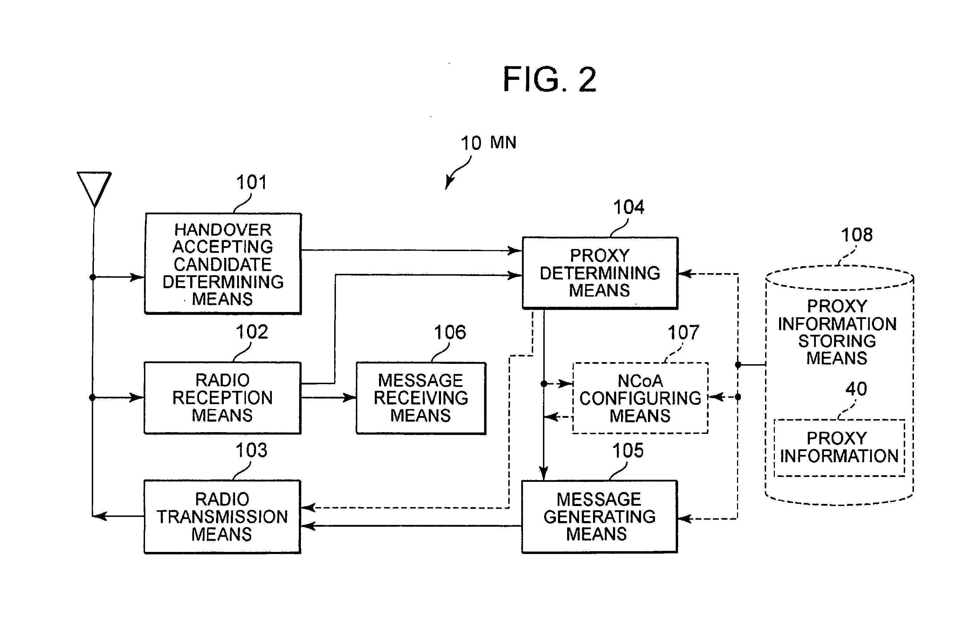

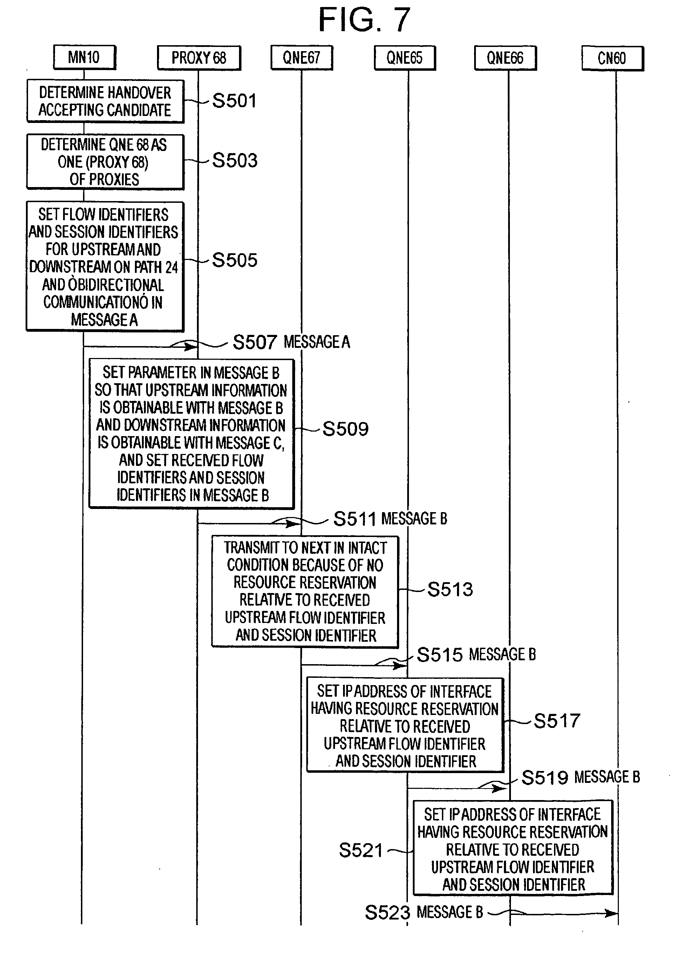

Secondly, a description will be given of the functions of the MN 10. FIG. 2 is a block diagram showing a configuration of an MN according to an embodiment of the present invention. In FIG. 2, although each function of the MN 10 is shown in the form of a block, the respective functions thereof are realizable by hardware and/or software. In particular, the principal processing (processing in each step shown in FIG. 7, which will be mentioned later) according to the present invention executable through the use of a computer program.

The MN 10 shown in FIG. 2 is made up of a handover accepting candidate determining means 101, a radio reception means 102, a radio transmission means 103, a proxy determining means 104, a message generating means 105 and a message receiving means 106. In addition, as options, it is also appropriate that it includes an NCoA configuring means 107 and a proxy information storing means 108. In FIG. 2, the option sections are shown by dotted lines.

The handover accepting candidate determining means 101 is, for example, a means to receive signals from a plurality of APs different from each other to seek a list of L2-handover-acceptable APs. In this connection, it is also possible that the MN 10 directly conducts the processing in the proxy determining means 104, mentioned later, without determining an L2 handover accepting candidate in the handover accepting candidate determining means 101. Moreover, each of the radio reception means 102 and the radio transmission means 103 is a means to data reception or data transmission through radio communication, and has various functions needed for the radio communication.

The proxy determining means 104 is for finding a proxy. The proxy to be found by the proxy determining means 104 signifies an NSIS node (QNE) with a QoS offering function, capable of making a preparation as an agent of the MN 10 in advance so that the MN 10 can continuously accept an additional service (in this case, QoS) after the handover, and exists on a QoS path scheduled to be set up when the MN 10 implements the handover.

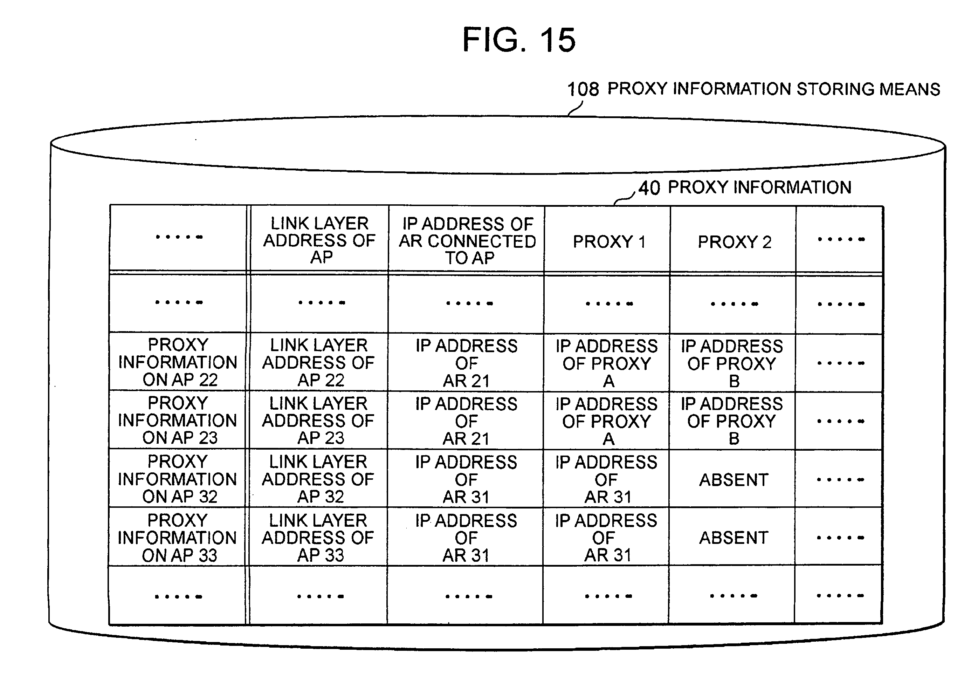

A plurality of methods are considered for finding this proxy. For example, there are a method of referring to proxy information 40 (proxy information 40 stored in the proxy information storing means 108) kept locally in the MN 10 on the basis of the information on an AP list acquired by the handover accepting candidate determining means 101 so as to retrieve and determine the proxy information 40 suitable for the communication with the CN 60 on a subnetwork to which the AP is in connection, a method of transmitting this AP list information to a server (proxy retrieving server) lying on an IP network, or the like, to receive the information related to the most suitable proxy, mentioned above, as a response, a method of selecting all the proxies kept in the proxy information 40, and other methods. The AR itself which is a handover accepting candidate is a QNE and sometimes becomes a proxy. FIG. 15 is an illustration of one example of contents of the proxy information 40. The proxy information 40 shown in FIG. 15 is one example produced by referring to the network configuration shown in FIG. 9. The proxy information 40 shown in FIG. 15 has an IP address which can selected as a proxy in a case in which an MN is in connection with each AP, and the MN can carries out the proxy selection and identification by seeing this proxy information 40. In this connection, it is desirable that, as a proxy, a QNE existing in the vicinity of an AR (near an AR in the network configuration) having each AP as a following.

The message generating means 105 is for generating a message including information needed for making a preparation in advance so that the MN 10 can accept the QoS without interruption after the handover. As the information needed for making the preparation in advance so that the MN 10 can accept the QoS without interruption after the handover, for example, there are a flow identifier and a session identifier currently in use, a data flowing direction (direction from the MN 10 to the CN 60, direction from the CN 60 to the MN 10, or bidirectional communication), and others. The aforesaid message generated by the message generating means 105 is taken as a message A.

The message receiving means 106 is for, when the proxy carries out the above-mentioned preparation, receiving a message (referred to as a message D) including the information, indicative of whether or not the preparation reaches success, from the proxy, and it is omissible depending upon a method of setting up a new QoS path. Incidentally, information obtained when the proxy has conducted the aforesaid preparation, and others, can also be included in the message D.

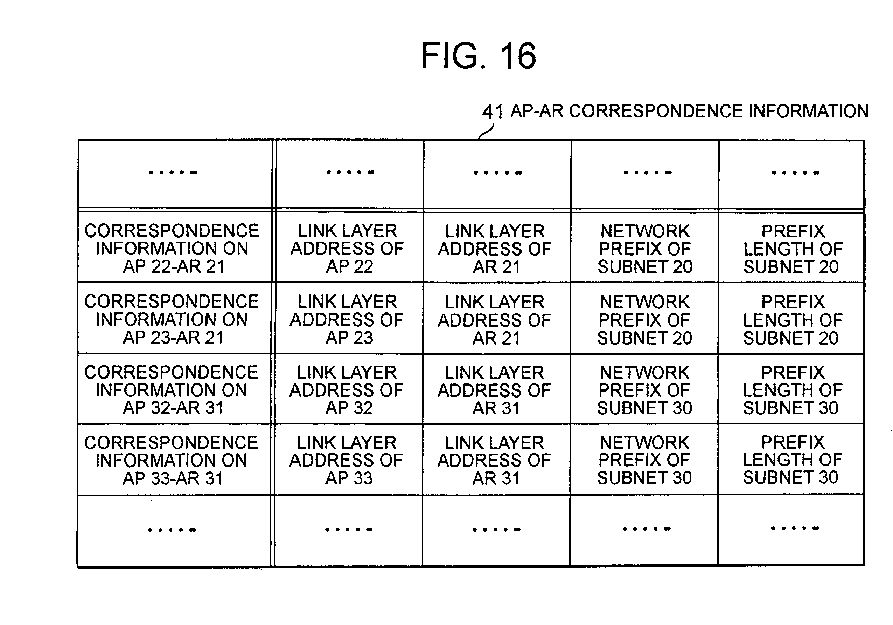

In addition, the MN 10 can also specify a movement destination and generate an NCoA to be used at the destination to send it to the proxy of the destination. The means to generate this NCoA is the NCoA configuring means 107, and the generated NCoA, together with flow identifiers and others, is stored in the message A by the message generating means 105. As the NCoA generating method, conceivably, for example, the MN 10 locally has AP-AR correspondence information 41 as shown in FIG. 16 (one example, produced with reference to FIG. 9 as well as FIG. 15) and retrieves this AP-AR correspondence information 41 on the basis of the information on the AP obtained by the handover accepting candidate determining means 101 and obtains the information on an AR (for example, link layer address of the AR, network prefix and prefix length of a subnet to which the AR pertains, or the like) connected to the AP, thereby automatically generating an NCoA in a stateless fashion.

However, in this case, since the NCoA is automatically generated in a stateless fashion, there is a need for a means to confirm whether or not this NCoA is usable in the handover-accepting subnet. For this reason, there is a need to conduct the processing to select a subnet, in which the AR itself can become a proxy, as the handover-accepting subnet and send a message containing an NCoA to this AR for making this AR with the proxy function examine the validity of the NCoA, or conduct the other processing. Moreover, as another NCoA acquisition method, the AR (AR pertaining to the subnet 20 before the handover) currently in communication previously receives a portion of the usable CoAs from a DHCP server of a subnet in the neighborhood and, before the MN 10 moves to a different AR (AR pertaining to the subnet 30 after the handover), allocates one of the CoAs, obtained from the DHCP server of that subnet, to the MN 10. In this case, since the CoA is allocated in a stateful fashion, there is no need to check the validity on the CoA and there is no need to impose limitation on the selection of anARwith a proxy function. Moreover, information (for example, information such as an IP address of a currently adjacent QNE (QNE 63) relative to the MN 10) other than this can also be included in the message A.

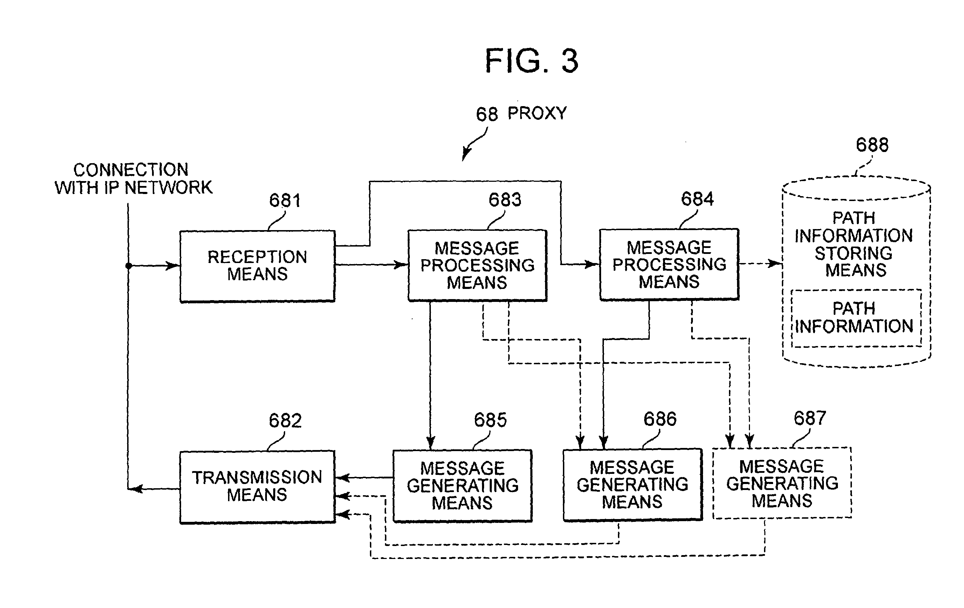

Furthermore, a description will be given of a function of a proxy (QNE 68) which receives a message from the MN 10. In this case, let it be assumed that a QNE 68 in FIG. 1 is selected as one of proxies. FIG. 3 is a block diagram showing a configuration of a proxy according to an embodiment of the present invention. As well as the MN 10 shown in FIG. 2, each function of the proxy 68 shown in FIG. 3 is realizable with hardware and/or software. In particular, the principal processing (processing in each step shown in FIG. 7, mentioned later) in the present invention is executable by a computer program.

The proxy 68 shown in FIG. 3 is made up of a reception means 681, a transmission means 682, message processing means 683, 684 and message generating means 685, 686. Moreover, as options, it can also include a message generating means 687 and a path information storing means 688. In FIG. 3, the option portions are indicated by dotted lines.

The reception means 681 and the transmission means 682 are for carrying out data reception and data transmission. The message processing means 683 is for receiving and processing a message (message A) generated by the message generatingmeans 105 of the MN 10 shown in FIG. 2 and transmitted by the radio transmission means 103. For example, it confirms the information on a flow of data included in the message A and makes a judgment on a desirable mode for the establishment of a QoS path. A variation of the QoS path establishing method based on a flow of data will be described together with a function of an intermediate QNE which will be mentioned later.

The message generating means 685 generates a message (referred to as a message B) including a flow identifier (for example, flow identifier X of the path 24) and a session identifier (for example, session identifier Y common to the path 24 and the path 34) which are received by the message processing means 683. The aforesaid message B generated by the message generating means 685 is a message for finding an CRN and is transmitted through the transmission means 682 toward the CN 60. Incidentally, IP address information on the CN 60 is included in this flow identifier.

The message processing means 684 is for receiving and processingamessage (referredtoasamessageC) sent, through each QNE on the path 34, from the CN60 which has received the message B generated by the message generating means 685 and transmitted. This message C includes the information on the CRN. On the basis of this CRN information, the message processing means 684 conducts the processing to promptly establish a QoS path at the handover of the MN 10. Conceivably, there are a plurality of methods of carrying out this processing. For example, it is also appropriate that this information is handed over to the path information storing means 688 and some processing is conducted when the MN 10 tries to conduct the handover, or that the information is further handed over to the message generating means 686 and is used as a return message (the above-mentioned message D) to the MN 10. However, this case requires that the message receiving means 106 shown in FIG. 2 is provided in the MN 10. Moreover, it is also appropriate that, as mentioned above, the message D includes the information indicative of whether or not the preparation reaches success. Still moreover, the message D can also include information other than this information.

In addition, it is also appropriate that, in a case in which the message processing means 683 receives the information on the NCoA of the MN 10, the message generating means 687 generates a new flow identifier on the basis of this NCoA and transmits an RESERVE message to the CN 60 on the basis of the CRN information received by the message processing means 684 so as to generate a new QoS path on the path 34. However, in this case, there is a need to provide, for example, a dif ferent function whereby the CRN information is given to the RESERVE message and the corresponding CRN prevents a double reservation of a resource reservation from it up to the CN 60. For example, by referring to the information on a CRN included in the message C, the information on a QSpec needed for the establishment of a QoS path and included in the RESERVE message, and other information, can be acquired from this CRN. Still additionally, in a case in which the information on the currently adjacent QNE (QNE 63) relative to the MN 10 is included in the message A, it is also possible to acquire them from the QNE 63. Yet additionally, in a case in which there is a need to check the validity of the NCoA sent as mentioned above, this check becomes necessary. If this proxy does not have a function to check the validity of the NCoA, or when the result of the validity check indicates no appropriateness, for example, a need exists for returning an error message for error notification to the MN 10. This error notification can be included in the message D, or it can also be returned as a different message (for example, FBAck message in FMIP). Moreover, the information (for example, information such as an NCoA on which the validity is confirmed and the currently adjacent QNE (QNE 63) of the MN 10 included in the message A) other than mentioned above can be included in the message B generated in the message generating means 685.

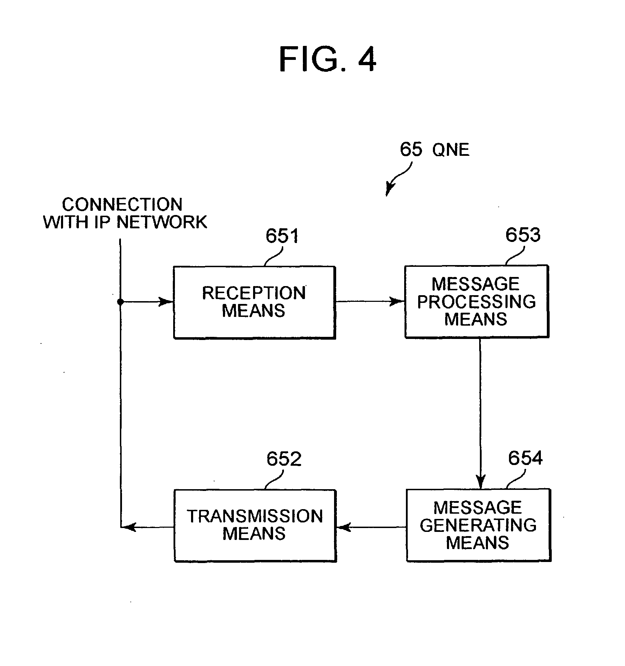

Secondly, taking note of the QNE 65 as an example, a description will be given of a function of an intermediate QNE on the path 34. FIG. 4 is a block diagram showing a configuration of an intermediate QNE on the path 34 according to an embodiment of the present invention. In the case of the MN 10 shown in FIG. 2, each function of the QNE 65 shown in FIG. 4 is realizable with hardware and/or software. In particular, the principal processing (processing in each step shown in FIG. 7, mentioned later) according to the present invention is executable with a computer program.

The QNE 65 shown in FIG. 4 is composed of a reception means 651, a transmission means 652, a message processing means 653, and a message generating means 654. The reception means 651 and the transmission means 652 have the same functions as those of the reception means 681 and the transmission means 682 in the proxy 68 shown in FIG. 3. Moreover, the message processing means 653 is for checking whether or not a resource reservation is already present in the QNE 65 with respect to a set of flow identifier and session identifier included in the above-mentioned message B or message C received. If there is no reservation, nothing is done in the message generating means 654, and the message B or the message C is transferred to the next QNE. On the other hand, if a reservation exists, in the message generating means 654, the IP address of the interface is stored in the same message and a new message generated by the message generating means 654 is transmitted through the transmission means 652 to the next QNE. However, in a case in which the message B or the message C makes a request to the QNE to some processing different therefrom, for example, in the case of an extension of a QUERY message or a RESPONSE message thereto, the processing peculiar to these message takes place.

The determination as to which of the message B and the message C conducts the above-mentioned processing depends upon the direction of flow of data and the functions of the other NSISs. As one example, in a case in which the data flow is in a direction from the CN 60 to the MN 10, from the way of thinking based on a QoS path establishing method according to the RSVP (see Non-Patent Document 3), it is appropriate that the above-mentioned processing is conducted upon receipt of the message C sent from the CN 60.

Since it is considered that the path through which data or signaling passes varies between a direction (referred to as upstream) from the MN 10 to the CN 60 and a direction (referred to as downstream) from the CN 60 to the MN 10, as a practical problem, it is considered that the message C passes through the path 34 (can establish the path 34) whereas the message B does not pass the path 34. Accordingly, there is a possibility that each QNE on the path 34 receives only one of the message B and the message C.

Conversely, in a case in which the same way of thinking is taken, when the data flow is an upstream, the path 34 is established by the message B and the processing is conducted by the aforesaid message processing means 653 and message generating means 654. In this case, the message C can serve as a message for only returning, to the proxy 68, a result of the processing conducted by each QNE at the reception of the message B. However, in the NSIS, due to the utilization of the function of the NTLP, the way of thinking of the path establishing method according to the RSVP does not always apply thereto. For example, in the case of the data flow in the downstream direction, the message B passes through the path 34, and the necessary information is collectable.

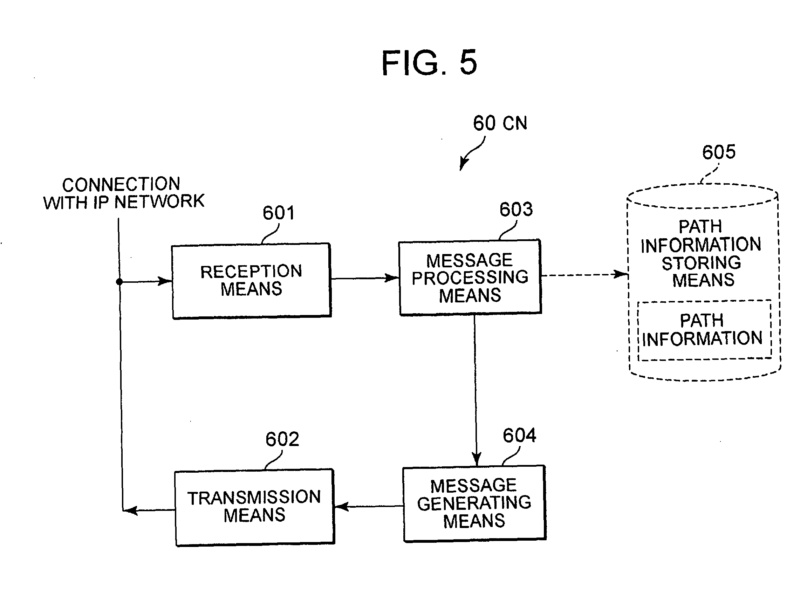

Furthermore, a description will be given of a function of the CN 60. FIG. 5 is a block diagram showing a configuration of a CN according to an embodiment of the present invention. As in the case of the MN 10 shown in FIG. 2, each function of the CN 60 shown in FIG. 5 is realizable with hardware and/or software. In particular, the principal processing (processing in each step shown in FIG. 7, mentioned later) according to the present invention is executable through the use of a computer program.

The CN 60 shown in FIG. 5 includes a reception means 601, a transmission means 602, a message processing means 603, a message generating means 604 and a path information storing means 605. The reception means 601 and the transmission means 602 have the same functions as those of the reception means 681 and the transmission means 682 in the proxy 68 shown in FIG. 3 and the reception means 651 and the transmission means 652 shown in FIG. 4. Moreover, the message processing means 603 has a function to receive and process the message B. For example, the message processing means 603 makes a decision as to whether the message B is issued with respect to the upstream or with respect to the downstream. Still moreover, when the message B includes information on a CRN for the upstream, the message processing means 603 can also hand over this information on the CRN to the path information storing means 605 so that the path information storing means 605 holds it. When obtaining the information on the NCoA of the MN 10 by using the information stored in the path information storing means 605, the CN 60 can conduct the QoS path establishment processing using the RESERVE message. The information on the NCoA of the MN 10 can be acquired simultaneously with the reception of the message B when it is included in the message B, and can also be acquired through a BU message from the MN 10. Yet moreover, the information on QSpec included in the RESERVE message and others can obtained from the CRN as mentioned above and, if the message B includes the IP address of the QNE 63, it can also be obtained from the QNE 63. In addition, the message generating means 604 is a means for generating the message C and transmitting the message C through the transmission means 602. In this connection, if the path information (information on which of QNEs has kept the resource reservation) is included in the message B, it is also possible to put it in the message C before the transmission. The message C can also include information other than the above-mentioned information.

Furthermore, a description will be given of an approach for the CN 60 or the proxy 68 to acquire the information on the CRN through the transmission/reception of the message B and the message C. Now, let it be assumed that the MN 10 and the CN 60 are in bidirectional communication with each other through the use of, for example, IP telephony. In this case, as the data flow, there are upstream and downstream, and these bidirectional data do not always pass through the same path (same router), and it is considered that the CRN also varies between the upstream side and the downstream side. In this case, although it is assumed that the bidirectional data pass through the same path, even in the case in which the bidirectional data pass through different paths, it is possible to determine a CRN for each of the bidirectional communications through the use of a method similar to a method which will be mentioned later. In the case of the bidirectional communications, a flow identifier and a session identifier exist with respect to a communication path in each of the directions, and the proxy may obtain a set of flow identifier and session identifier in each of these two directions from the MN 10 and put them in the message before transmitting to the CN 60.

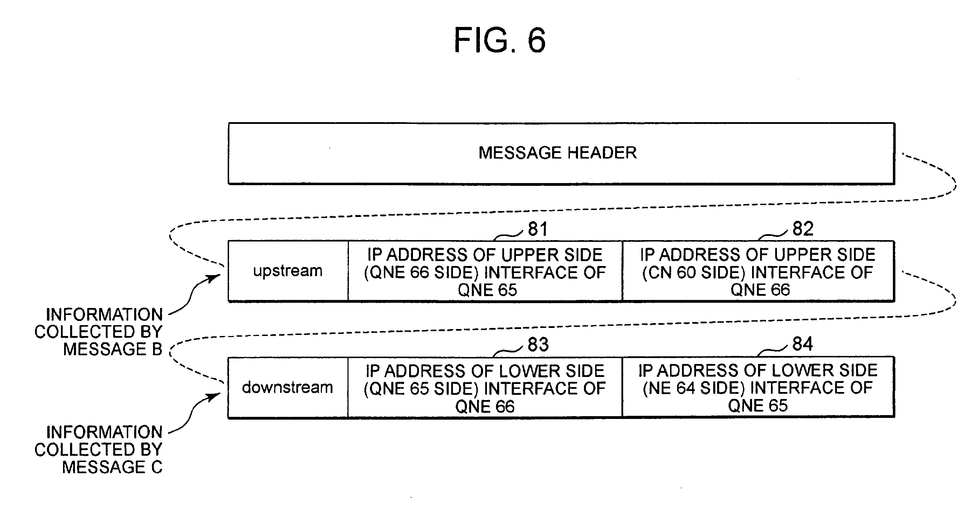

FIG. 6 is an illustration of one example of information which can provide a proxy through the transmission/reception of the messages B and C. The information on an IP address of an interface having a resource reservation is added to the end portion of each of the messages B and C whenever each of the messages B and C passes through a QNE having this resource reservation with respect to a pair of flow identifier and session identifier of each of the messages B and C. For example, in the case of the message B, when it passes through the QNE 65, an IP address (information 81: IP address of an interface on the upper side (QNE 66 side) of the QNE 65) of an interface having a resource reservation having upstream flow identifier and session identifier is added thereto, and when it passes through the QNE 66, an IP address (information 82: IP address of an interface on the upper side (CN60 side) of the QNE 66) of an interface having a resource reservation having upstream flow identifier and session identifier in the interior of the QNE 66 is added to a further rear portion thereof.
Through the use of this mechanism, when this information is returned to the CN 60 or the proxy 68, the CN 60 or the proxy 68 can make a judgment that the QNE having the IP address (IP address of the information 81) of the interface added in the first place is an upstream CRN. Moreover, with respect to the downstream, the sequence becomes reversed and, hence, the proxy 68 can make a decision that, of the information 83 and the information 84, the QNE having the IP address (IP address of the information 84) of the interface added at last is a downstream CRN. Incidentally, the QoS path can vary due to a factor such as a network condition, and there is a possibility that the CRN also varies. For coping with the possibility of such a variation of the CRN, a term of validity is set with respect to the information on the CRN held by the CN 60 or the proxy 68 and, before the term of validity expires, the CN 60 or the proxy 68 can also confirm whether or not a variation occurs in the CRN or acquires the information on the latest CRN so as to hold accurate information on the CRN. Incidentally, the CN 60 or the proxy 68 which receives the information on the CRN can also perform this setting of the term of validity, or the term of validity can also be notified to the CN 60 or the proxy 68 when the MN 10 sends the message A.

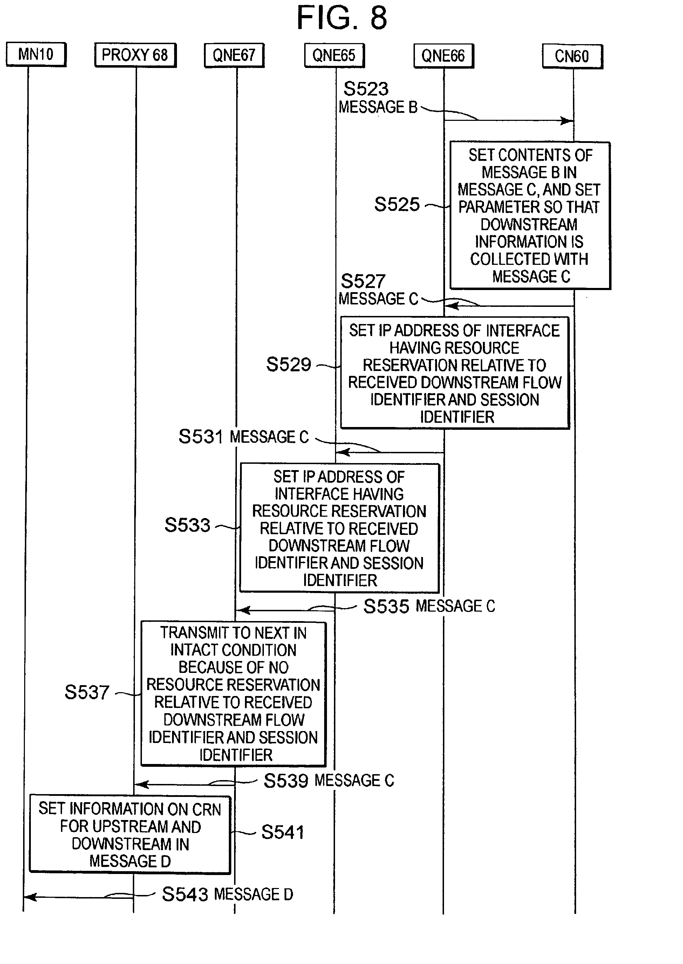

Furthermore, a description will be given of an operation to be conducted in a case in which the MN 10 makes a request to the proxy 68 for the preparation of establishment of a QoS path and the preparation takes place. FIGs. 7 and 8 are sequence charts showing an example of an operation to be conducted according to the embodiment of the present invention when the MN 10 sends information on identifiers (flow identifier and session identifier) to the proxy 68 and the proxy 68 and the CN 60 interchange messages through intermediate QNEs 65 to 67 for finding an upstream or downstream CRN. The sequence charts shown in FIGs. 7 and 8 apply to a case in which, in the network system shown in FIG. 1, the MN 10 selects the proxy 68 as one of proxies and, in this case, after acquiring the information on the CRN, the proxy 68 is made to return this information to the MN 10. Moreover, the sequence charts shown in FIGs. 7 and 8 indicate a series of operations and a step S523 shown in he sequence charts of FIGs. 7 and 8 conducts the same processing.

Upon receipt of L2 information from an L2 signal reachable AP in the neighborhood, the MN 10 first determines a handover-acceptable subnetwork on the basis of this information (step S501: determining a handover-accepting candidate) and then determines a proxy for the handover-accepting candidate on the basis of the L2 information of the AP (step S503: determining the QNE 68 as one of proxies (proxy 68)). The MN 10 which has determined the proxy sets upstream flow identifier and session identifier and downstream flow identifier and session identifier on the path 24 in the message A and further sets information indicative of bidirectional communication therein (step S505: setting upstream and downstream flow identifiers and session identifiers on the path 24 and "bidirectional communication" in the message A), and transmits the message A to the selected proxy group (a plurality of proxies) (step S507). In this case, in particular, a description will be limited to the processing to be conducted after the message A is sent to the proxy 68 which is one of the proxy group. Incidentally, the message A can include information (IP address or the like) on the destination of the message B. Although the destination of the message B is the CN 60 in FIGs. 7 and 8, for example, in a case in which a retrieval of a CRN on a QoS path is made with respect to a communication using a triangular path in the mobile IPv6, it is also acceptable that the destination of the message B is set at a home agent of the MN 10.

The proxy 68 generates a message B on the basis of the information on the message A received from the MN 10. Since the bidirectional communication is considered in this case, a parameter is set so that, in a router lying on the way, the upstream information is obtainable through the message B and the downstream information is obtainable through a reply message (message C), and a flow identifier and a session identifier, sent through the message A, are set in the message B (step S509: setting a parameter in the message B so that the upstream information is attainable through the message B and the downstream information is attainable through the message C, and additionally setting the received flow identifier and session identifier in the message B), and the message B is sent to the CN 60 (step S511). Incidentally, at this time, there is a need for the proxy 68 to acquire the address of the CN 60.

Each of the QNEs 65 to 67 on a path from the proxy 68 to the CN 60 confirms the contents of the message B so as to confirm whether or not a resource reservation relative to the upstream flow identifier and session identifier therein exists in the QNE. If the resource reservation relative to the upstream flow identifier and session identifier exists, each QNE adds the IP address of the interface having this resource reservation to the message B and sends it toward the CN 60. On the other hand, if the resource reservation relative to the upstream flow identifier and session identifier does not exist, each QNE transfers the message B as it is without adding the information.

In this connection, since the resource reservation relative to the upstream flow identifier and session identifier does not exist in the QNE 67, the message B is directly transferred without the addition of the information (step S513: sending the message B to the next in a state untouched because of no existence of the resource reservation relative to the upstream flow identifier and session identifier, step S515). Moreover, since the resource reservation relative to the upstream flow identifier and session identifier exists in the QNE 65, the IP address of the interface having this resource reservation is added to the message B and the message B is then transferred (step S517: setting the IP address of the interface having the resource reservation corresponding to the received upstream flow identifier and session identifier, step S519). Moreover, as well as the QNE 65, since the resource reservation relative to the upstream flow identifier and session identifier exists in the QNE 65, the IP address of the interface having this resource reservation is added to the message B and the message B is then transferred (step S521: setting the IP address of the interface having the resource reservation corresponding to the received upstream flow identifier and session identifier, step S523).

Lastly, the message B arrives at the CN 60 and, upon receipt of this message B, the CN 60 sets, in the message C, the information (information added to the message B by the respective QNEs 65 to 67) added by the respective QNEs 65 to 67, and sets a parameter so as to collect the information on the downstream path through the message C (step S525: setting the contents of the message B in the message C and setting a parameter for collecting the downstream information through the message C) and transmits it to the proxy 68 (step S527. Moreover, each of the QNEs 65 to 67 lying on the path from the CN 60 to the proxy 68 carries out the processing, similar to the processing on the above-mentioned message B, with respect to the message C.

Since a resource reservation corresponding to the downstream flow identifier and session identifier exists in the QNE 66, the IP address of the interface having this resource reservation is added to the message B and the message B is then transferred (step S529: setting the IP address of the interface having a resource reservation corresponding to the received downstream flow identifier and session identifier, step S531). Moreover, as well as the QNE 65, a resource reservation corresponding to the downstream flow identifier and session identifier exists in the QNE 65, the IP address of the interface having this resource reservation is added to the message B and the message B is then transferred (step S533: setting the IP address of the interface having a resource reservation corresponding to the received downstream flow identifier and session identifier, step S535). Still moreover, since a resource reservation corresponding to the downstream flow identifier and session identifier does not exist in the QNE 67, the message B is transferred in an intact condition without adding the information (step S537: transmitting it to the next as it stands because of no resource reservation corresponding to the received downstream flow identifier and session identifier, step S539).

The proxy 68, which receives the message C in this way, can specify the CRN information for the upstream and the downstream by referring to the message C, and sets the CRN information for the upstream and the downstream in a message D (step S541: setting the CRN information for the upstream and the downstream in a message D) and transmits the message D to the MN 10 (step S543).

As mentioned above about the function of the MN 10, after the collection of the information on the CRN, in addition to sending the CRN information to the MN 10, the proxy 68 can take various measures. Moreover, when learning the CRN information at an early stage, for example, the MN 10 can put this CRN information in a RESERVE message in the case of making a resource reservation after the movement from the subnet. Still moreover, when the relevant CRN receives the RESERVE message including the CRN information, the relevant CRN can conduct the processing so as to prevent the double reservation of resources up to the succeeding CN 60. For example, the relevant CRN can also conduct the processing such as updating the old reservation without newly making a reservation of a resource.

In a case in which the CRN is specified in advance in this way, even if it is a resource reservation after the handover of the MN 10, since the resource reservation is not made while seeking a CRN unlike the conventional technique, the setup of a QoS path becomes promptly feasible. Moreover, as mentioned above, the proxy 68, which has obtained the CRN information, can also make a resource reservation in advance without returning the information to the MN 10, which realizing the establishment of a QoS path more promptly.

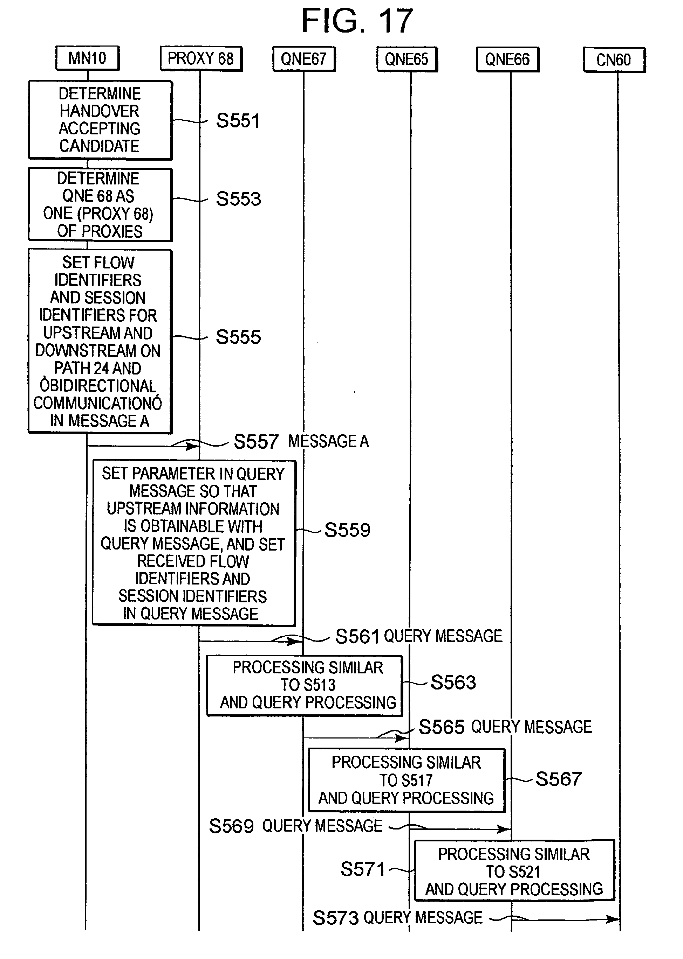

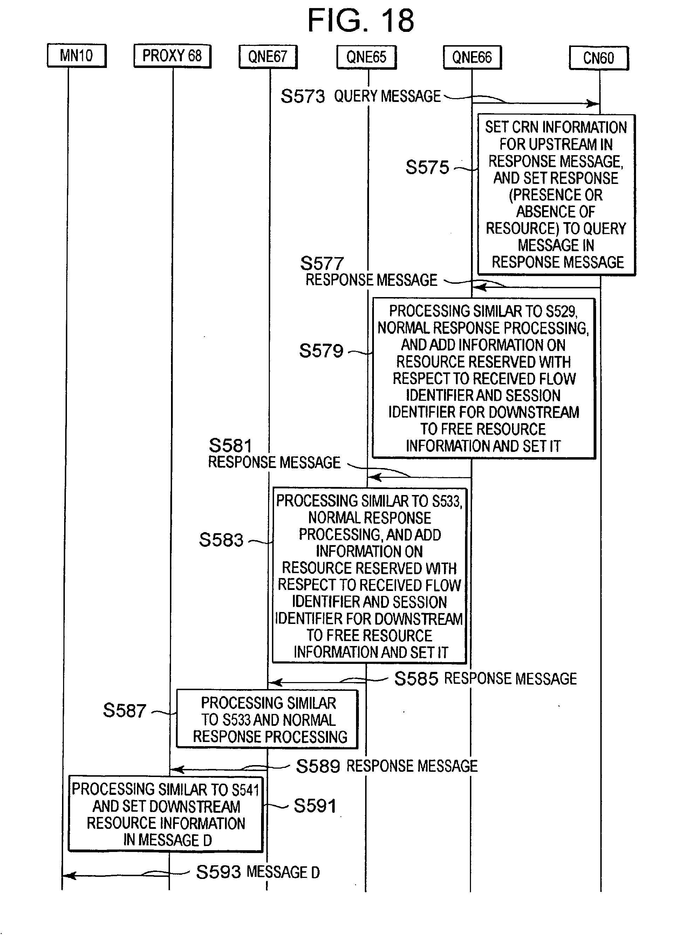

In addition, as mentioned above, it is also possible to rewrite the message B or the message C into the existingmessage, for example, the QUERY message, the RESPONSE message or the NOTIFY message. FIGs. 17 and 18 show a sequence chart in a case in which the QUERY message has the function of the message B and the RESPONSE message has the function of the message C. In this case, a message to be interchanged has not only a function to find upstream and downstream CRNs but also the intended functions (function for acquiring information on a free resource, and other functions) of the QUERY and RESPONSE messages. In FIGs. 17 and 18, steps S551 to S593 are in correspondence relation to the steps S501 to S543 in FIGs. 7 and 8, and the QUERY message and the RESPONSE message are in correspondence relation to the message C and the message D, respectively.

As mentioned above, in the case of employing the conventional QUERY and RESPONSE messages, since a terminal such as the MN 10, which is made to move, does not have a means to seize the information on a resource reserved through the present communication with a communication partner, difficulty is experienced in making a decision that the information on the resource reserved through the present communication between the CRN and the CN 60 is the information on a resource available at the movement of the MN 10 thereto. However, when the QUERY and RESPONSE messages have the information on the present flow identifier and session identifier of the MN 10, a decision can be made that the information on the resource reserved through the present communication is the information on a resource available at the movement of the MN 10 thereto.

In this connection, according to the Non-Patent Document 6, the information on the free resource is obtainable by only the RESPONSE message. That is, as shown in FIGs. 17 and 18, when the proxy 68 transmits a QUERY message to the CN 60 and the CN 60 returns a RESPONSE message, there is a possibility that only the information on the downstream resource is attainable. Accordingly, when the bidirectional free resource information is necessary, it is considered that there is a need for the CN 60 which has received the QUERY message from the proxy 68 to return the RESPONSE message to the MN 10 and to transmit a different QUERY message to the proxy 68 at the same time. Moreover, there is a possibility that, through the use of a combination with a different function of the NSIS, the bidirectional free resource information is attainable through single transmission/reception of the QUERY and RESPONSE messages.

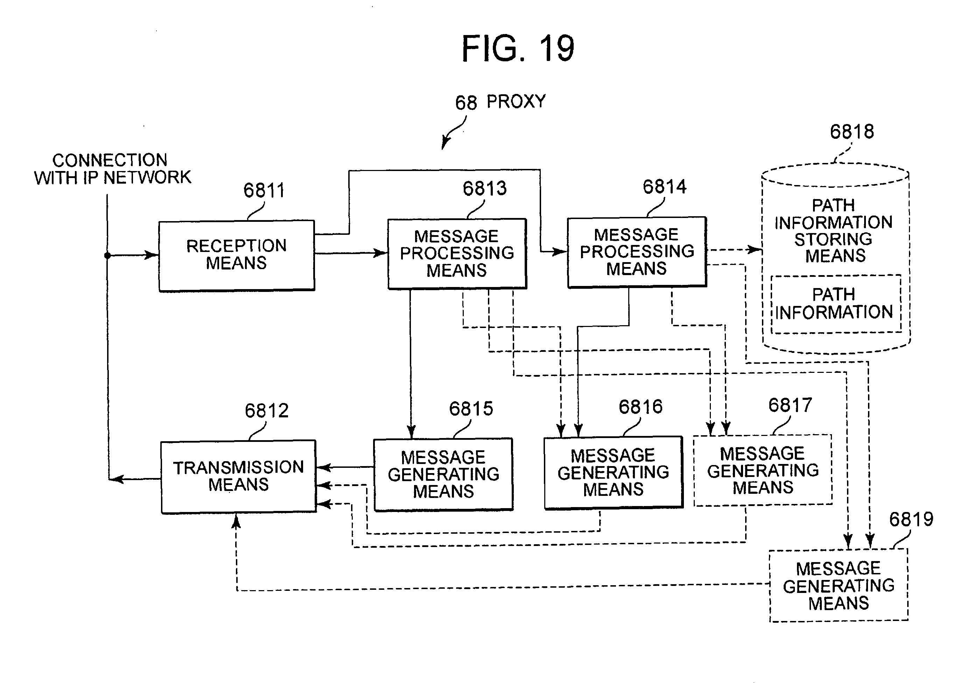

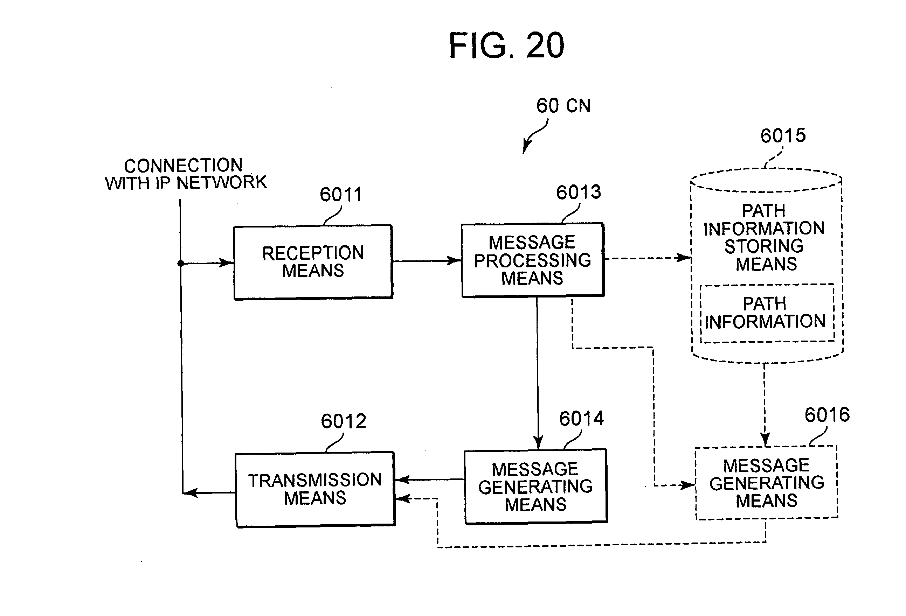

Incidentally, as the method in which the proxy 68 processes the CRN information (CRN information included in the message C) obtained by the message processing means 684 shown in FIG. 3 and the method in which the CN 60 processes the CRN information (CRN information included in the message B) obtained by the message processing means 603 shown in FIG. 5, other methods are also conceivable. These methods will be described with reference to FIGs. 19 and 20.

FIG. 19 is a block diagram showing a configuration of a proxy for realizing a processing method after the reception of a message C according to an embodiment of the present invention. As well as the proxy 68 shown in FIG. 3, each function of the proxy 68 shown in FIG. 19 is realizable with hardware and/or software. Moreover, a reception means 6811, a transmission means 6812, message processing means 6813, 6814, message generating means 6815, 6816, 6817 and a path information storing means 6818 in FIG. 19 have the same functions as those of the reception means 681, the transmission means 682, the message processing means 683, 684, the message generating means 685, 686, 687 and the path information storing means 688, respectively, and the description thereof will be omitted here.

The message generating means 6819 shown in FIG. 19 has a function to generate a message (referred to as a message E) for making a request to a different node for the generation of a QoS path and to hand over it to the transmission means 6812. For example, a CRN specified through the processing related to the message B in the message processing means 6814 is considered as the destination of the message E. In this case, the message E includes the information (for example, the NCoA of the MN 10 whose validity has been confirmed, the IP address of the CN 60, or the like) needed for the generation of a QoS path by the CRN. The CRN which has received the message E from the proxy 68 transmits a RESERVE message to, for example, both the CN 60 and the proxy 68, thereby updating the QoS path from the CRN to the CN 60 for newly generating a QoS path from the CRN to the proxy 68.

FIG. 20 is a block diagram showing a configuration of a CN for realizing a different processing method after the reception of a message B according to an embodiment of the present invention. As well as the CN 60 shown in FIG. 5, each function of the CN 60 shown in FIG. 20 is realizable with hardware and/or software. Moreover, a reception means 6011, a transmission means 6012, a message processing means 6013, a message generating means 6014 and a path information storing means 6015 in FIG. 20 have the same functions as those of the reception means 601, the transmission means 602, the message processing means 603, the message generating means 604 and the path information storing means 605 in FIG. 5, respectively, and the description thereof will be omitted here.

The message generating means 6016 shown in FIG. 20 has a function to generate a message (referred to as a message E) for making a request to a different node for the generation of a QoS path and to hand it over to the transmission means 6012. For example, a CRN specified through the processing related to the message B in the message processing means 6013 is considered as the destination of the message E. In this case, the message E includes the information (for example, the NCoA of the MN 10 whose validity has been confirmed and which has been obtained through the method mentioned above, the IP address of the proxy 68 which is a source of the message B, or the like) needed for the generation of a QoS path by the CRN. The CRN which has received the message E transmits a RESERVE message to, for example, both the CN 60 and the proxy 68, thereby updating the QoS path from the CRN to the CN 60 for newly generating a QoS path from the CRN to the proxy 68.

Secondly, a description will be given of an operation in which the proxy 68 makes a request for the generation of a QoS path to the CRN specified through the reception of the message C. In this case, although it is assumed that bidirectional communications are taken and the bidirectional paths are equal to each other, even in a case in which only one of the upstream side and the downstream side is taken or the bidirectional data communication is conducted and the bidirectional paths are different between the upstream side and the downstream side, when methods similar to methods which will be mentioned later are used separately for the upstream path or bidirectional paths, the implementation of the QoS path generation request is feasible.

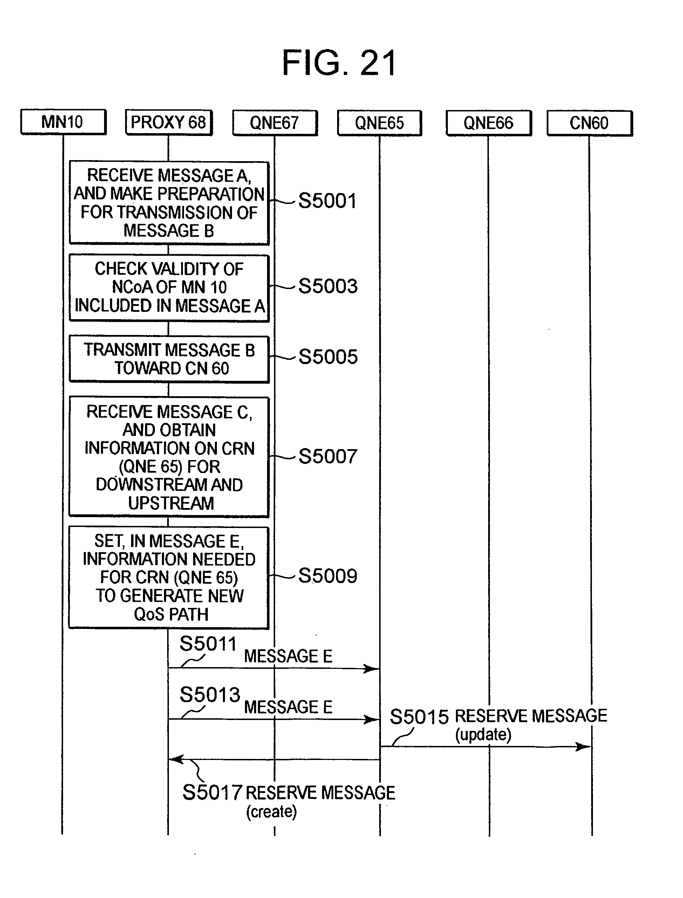

FIG. 21 is an illustration of a sequence chart showing an example of an operation in which the proxy 68 which has received a message (message A) including an NCoA from the MN 10 makes a request for a production of a new QoS path to a downstream CRN specified through the interchange of messages (message B and message C) with respect to the CN 60. The sequence chart shown in FIG. 21 signifies a case in which, in the network system shown in FIG. 1, the proxy 68 is selected as one of the proxies by the MN 10. Moreover, although the processing similar to those of the steps S511 to S523 in FIG. 7 and the steps S525 to S529 in FIG. 8 are conducted between steps S5005 and S5007 in FIG. 21, they are omitted here.

The proxy 68 generates a message B on the basis of the information on the message A received from the MN 10. Since the bidirectional communication is considered in this case, the proxy 68 sets a parameter so that, through a router on the way, the upstream information is obtainable by the message B and the downstream information is attainable by a reply message (message C), and further sets a flow identifier and a session identifier, sent through the message A, in the message B (step S5001: receiving the message A, and making the preparation for the transmission of the message B) to transmit the message B to the CN 60 (step S5005: transmitting the message B toward the CN 60). In this connection, at this time, the proxy 68 is required to obtain the address of the CN 60 through the use of the flow identifier information. Moreover, the proxy 68 makes a preparation for the transmission of the message B in the step S5001 and further checks the validity of the NCoA of the MN 10 included in the message A (step S5003: checking the validity of the NCoA of the MN 10 included in the message A).

In addition, upon receipt of the message C which is a reply message to the message B transmitted in the step S5005, the proxy 68 refers to the message C so as to specify the information on the CRNs for the upstream and the downstream (step S5007: receiving the message C, and obtaining the information on the CRN (QNE 65) for the upstream and the downstream). The proxy 68 sets, in the message E, the information needed when these CRNs establish a new QoS path (step S5009: setting, in the message E, the information needed for the CRNs (QNE 65) to generate a new QoS path), and transmits the message E to each of the CRNs for the upstream and the downstream obtained in the step S5007 (Steps S5011 and S5013) . In this case, although the both the CRNs for the upstream and the downstream becomes the QNE 65, since it is considerable that the interface addresses of the CRNs for the upstream and the downstream differ from each other (different interface addresses in the QNE 65 are acquired as the CRNs for the upstream and the downstream in the step S5007), the message E is transmitted separately to the upstream and downstream sides. For example, a flow identifier to be used in a new QoS path, or the like, is considered as the information needed when the CRNs establish a new QoA path. This new flow identifier can be generated on the basis of the NCoA of the MN 10 confirmed in validity in the step S5003. Moreover, conceivably, the IP address of the CN 60, a session identifier, or the like, are considered as the information needed when the CRNs establish a new QoA path.

Upon receipt of the message E, the QNE 65 transmits a RESERVE message, for updating the QoS path, to the CN 60 (step S5015), and transmits a RESERVE message, for newly generating a QoS path, to the proxy 68 (step 5017). In this case, both the QoS paths for the upstream and the downstream are updated in the step S5015, and both the QoS paths for the upstream and the downstream are newly generated in the step S5017.

In addition, also in a case in which a request is made to the upstream CRN for the generation of a new QoS path after the CN 60 acquires the information on the upstreamCRN, a similar method is employable. In this case, after acquiring the upstream CRN information and the NCoA of the MN 10 having validity, the CN 60 shown in FIG. 20 transmits the message E to the upstream CRN. Incidentally, in this case, it is also possible that the information on the IP address of the proxy 68 is included in the message E.

Still additionally, through the proxy determining means 104 of the MN 10 shown in FIG. 2, the MN 10 can also select the CN 60 as a proxy. Yet additionally, the CN 60 can also have not only a function similar to that of the proxy 68 shown in FIG. 3 but also the function of the CN 60 shown in FIG. 5, and the proxy 68 can also have, in addition to a function similar to that of the CN 60 shown in FIG. 5, the function of the proxy 68 shown in FIG. 3. In this case, the CN 60 which has received the message A from the MN 10 can transmit/receive the message B and the message C with respect to the proxy 68, thereby obtaining the information on the CRN.

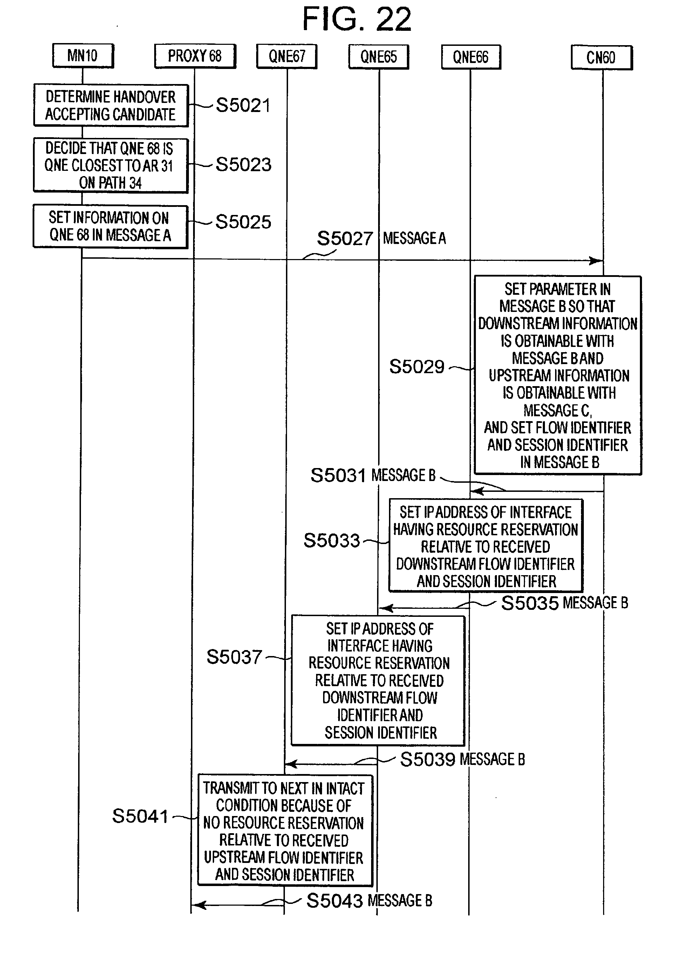

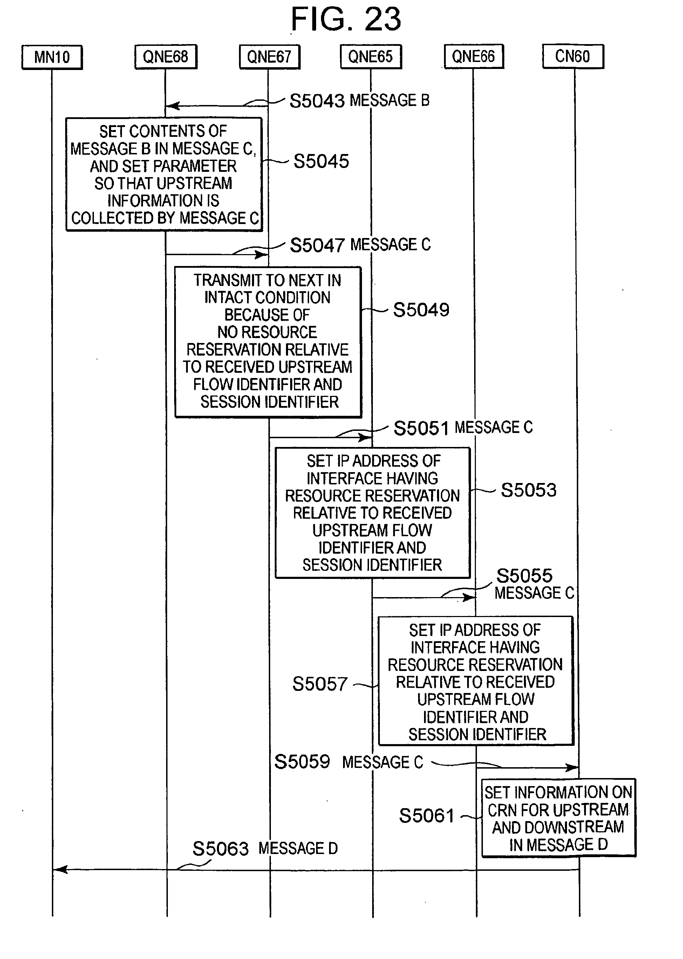

Referring to sequence charts of FIGs. 22 and 23, a description will be given of an operation in a case in which the CN 60 is selected as the proxy 68 as mentioned above. The sequence charts shown in FIGs. 22 and 23 show a series of operations, and the steps S5043 shown in the sequence charts of FIGs. 22 and 23 carry out the same processing. Moreover, the sequence charts shown in FIGs. 22 and 23 shows a case in which, in the network system shown in FIG. 1, the subnet 30 is selected as a candidate for a subnetwork of a movement destination of the MN 10 and, after obtaining the information on the CRN, the CN 60 returns this information to the MN 10.

In FIG. 22, when receiving the L2 information from an L2-signal reachable AP in the neighborhood, the MN 10 first determines a handover acceptable subnetwork on the basis of this information (step S5021:determining a handover accepting candidate) and then, on the basis of the L2 information from the AP, makes a decision on a QNE (QNE closest to the AR 31 on the path 34 in a case in which, in FIG. 1, the subnet 30 is taken as a movement destination) adjacent to the MN 10 on a QoS path, established when the MN 10 moves to the subnetwork, (step S5023: making a decision that the QNE 68 is a QNE closest to the AR 31 on the path 34). For this decision, a method similar to the method in the above-described embodiment, which is conducted when the MN 10 determines a proxy, is employable.

The MN 10 sets, in the message A, the information on the QNE (QNE 68) decided in the step S5023 (step: S5025: setting the information on the QNE 68 in the message A). In particular, a description will be given herein of a case in which the information on the QNE 68 is set in the message A as one of the information on the QNE information which has undergone the decision in the step S5023. Incidentally, upstream flow identifier and session identifier on the path 24, downstream flow identifier and session identifier thereon, and the information indicative of bidirectional communication can also be set in the message A. Following this, the MN 10 transmits this message A to the CN 60 (step S5027).

The CN 60 generates a message B on the basis of the information on the message A received from the MN 10. Since the bidirectional communication is considered in this case, the CN 60 sets a parameter so that, from a router on the way, the downstream information is obtainable with the message B and the upstream information is obtainable with the reply message (message C), and sets a flow identifier and a session identifier in the message B (step S5029: setting a parameter in the message B so that the downstream information is attainable through the message B and the upstream information is attainable through the message C, and additionally setting the flow identifier and the session identifier in the message B) and transmits the message B to the QNE 66 (step S5031). Incidentally, if the information on the flow identifier and session identifier to be set in the message B are included in the message B, it is also possible to copy these information included in the message A into the message B. On the other hand, also in a case in which the information on the flow identifier and the session identifier are not included in the message A, the CN 60 can set the information on the flow identifier and the session identifier, which are being used in the present communications with respect to the MN 10, in the message B.

Each of the QNEs 65 to 67 lying on the path from the CN 60 to the QNE 68 confirms the contents of the message B to confirm whether or not a resource reservation relative to the downstream flow identifier and session identifier thereof exists in each of the QNEs 65 to 67. If the resource reservation relative to the downstream flow identifier and session identifier exists therein, each of the QNEs 65 to 67 adds the IP address of the interface in which this resource reservation exists to the message B and then sends this message B to the QNE 68. On the other hand, if the resource reservation relative to the downstream flow identifier and session identifier does not exist therein, the message B is transferred in an intact condition without adding the information.

In this connection, the resource reservation relative to the downstream flow identifier and session identifier exists in the QNE 66 and, after the IP address of the interface where this resource reservation exists is added to the message B, the message B is transferred (step S5033: setting the IP address of the interface having the resource reservation relative to the received downstream flow identifier and session identifier, step S5035). Moreover, as well as the QNE 66, the resource reservation on the downstream flow identifier and session identifier also exists in the QNE 65 and, after the IP address of the interface having this resource reservation is added to the message B, the message B is transferred (step S5037: setting the IP address of the interface having the resource reservation relative to the received downstream flow identifier and session identifier, step S5039). On the other hand, since no resource reservation relative to the downstream flow identifier and session identifier exists in the QNE 67, the message B is transferred in an intact condition without adding the information (step S5041: transmitting the message B to the next as it is because of no resource reservation relative to the received downstream flow identifier and session identifier, step S5043).

Lastly, the message B arrives at the QNE 68, and upon receipt of this message B, the QNE 68 sets the information added by each of the QNEs 65 to 67 (information added to the message B by each of the QNEs 65 to 67) in the message C and sets a parameter so that the information for the upstream path can be collected through the message C (step S5045: setting the contents of the message B, and setting a parameter so as to collect the upstream information through the message C), and transmits it toward the CN 60 (step S5047). Moreover, in each of the QNEs 65 to 67 existing on the path from the QNE 68 to the CN 60, in the case of receiving the message C, the processing similar to the afore said processing with respect to the message B is conducted with respect to the upstream message C.

That is, since a resource reservation relative to the upstream flow identifier and session identifier does not exist in the QNE 67, the message C is transferred in an intact condition without adding the information (step S5049: transmitting the message C as it is because of no resource reservation relative to the received upstream flow identifier and session identifier, step S5051). Moreover, a resource reservation relative to the upstream flow identifier and session identifier exists in the QNE 65, and after the IP address of the interface having this resource reservation is added to the message C, the message C is transferred (step S5053: setting the IP address of the interface having the resource reservation relative to the received upstream flow identifier and session identifier, step S5055). Furthermore, as well as the QNE 65, a resource reservation relative to the upstream flow identifier and session identifier also exists in the QNE 66, and after the IP address of the interface having the resource reservation is added to the message C, the message C is transferred (step S5057: setting the IP address of the interface having the resource reservation relative to the received upstream flow identifier and session identifier, step S5059).

The CN 60 which has received the message C in this way can specify the information on the CRN for each of the upstream and the downstream by referring to the message C, and sets the information on the CRN for each of the upstream and the downstream in the message D (step S5061: setting the information on the CRN for each of the upstream and the downstream in the message D), and transmits the message D to the MN 10 (step S5063).

Incidentally, as mentioned above in the function of the MN 10, after collecting the information on the CRN, the CN 60 can take various measures besides sending the information on the CRN to the MN 10. Moreover, although in this case it is assumed that the data is handled by the bidirectional communications and the bidirectional data pass through the same path, also in a case in which the bidirectional data passes through different paths, a CRN for each of the bidirectional communications can be determined by employing a method similar to the above-mentioned method.

The expression "destination" described in this embodiment, for example, the expression "transmit to the CN 60", does not always signify designating and transmitting the address of the CN 60 to the IP header destination address but signifying that the partner which finally receives a message is the CN 60.

Moreover, when the data flow is the upstream, it is possible to find a CRN without sending a message up to the CN 60. Such an example will be described with reference to FIGs. 1, 24 and 25.

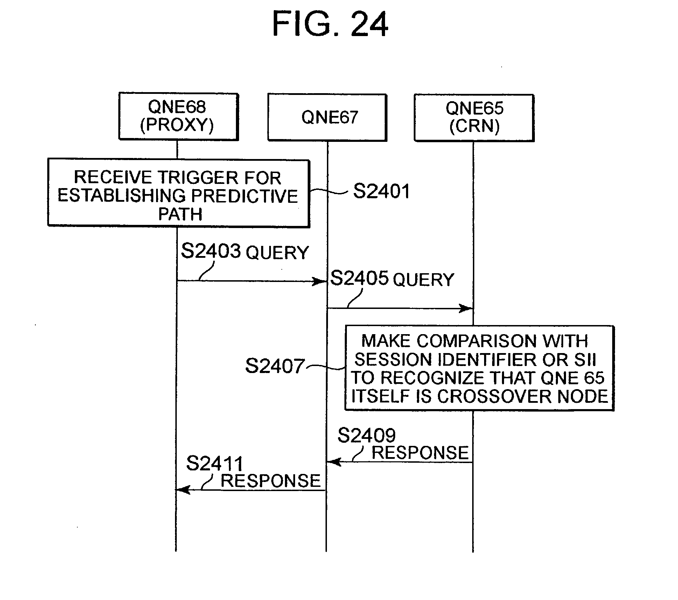

FIG. 24 is a sequence chart showing one example of an operation in a case in which, in a communication system according to an embodiment of the present invention, an MN finds a CRN without sending a message to a CN, and shows a method of using a QUERY message and a RESPONSE message as messages.

In the sequence chart shown in FIG. 24, the QNE 68 first receives a trigger for establishing a predictive path (step S2401 : receiving a trigger for establishing a predictive path). This trigger is, for example, the above-mentioned message A sent from the MN 10 to the proxy 68. Moreover, this trigger includes information needed for the preparation of establishment of a predictive path, for example, the information on a session identifier the MN 10 and the CN 60 use in the current communication path (path 24). Since there is a possibility that a plurality of flow identifiers correspond to the session identifier, the message A can also include identification information (for example, the present flow identifier) for specifying which of flows is taken for the preparation of establishment of a predictive path. In this case, let it be assumed that the message A includes a flow identifier used in the path 24. Moreover, it is also appropriate that the message A includes information (for example, IP address of the CN 60) for specifying the CN 60, and others. Still moreover, it is also appropriate that the message A includes information (IP address or the like) on the destination of the message B and, for example, in a case in which a retrieval of a CRN on a QoS path is made with respect to a communication using a triangular path in the mobile IPv6, it is also possible that the destination of the message B is set at a home agent of the MN 10 in place of the CN 60.

Upon receipt of the trigger, the proxy 68 transmits a message (for example, QUERY message is usable) toward the CN 60 (step S2403). At this time, it is also acceptable that, when generating a new flow identifier (flow identifier for the path 34), the proxy 68 generates a flow identifier with its own IP address as a source address. Moreover, the QUERY message includes the information on a session identifier the MN 10 and CN 60 use in the present communication path (path 24), and others. It can also include identification information (for example, the present flow identifier) for specifying which of flows is taken for the preparation of establishment of a predictive path.

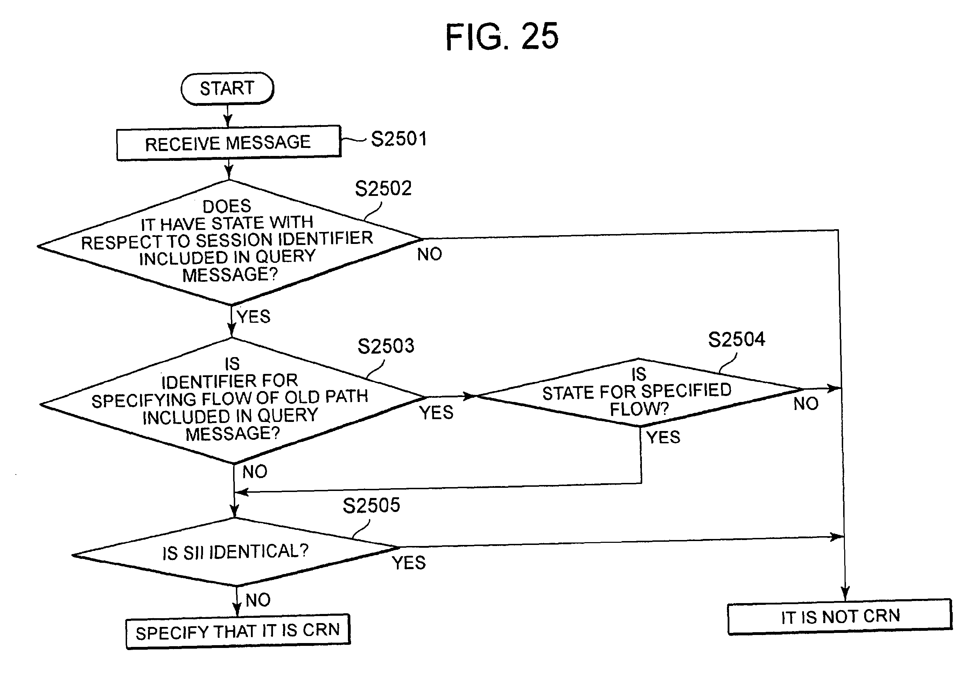

Upon receipt of the QUERY, the QNE 67 makes a decision shown in FIG. 25. FIG. 25 is a flow chart showing one example of a method in which, in a communication system according to an embodiment of the present invention, a QNE which has received the message makes a decision as to whether or not the QNE itself is a CRN. After the reception of the QUERY message (step S2501 : receiving a message), the QNE 67 checks whether or not the QNE 67 itself has a state (resource reservation) with respect to a session identifier included in this QUERY message (step S2502: Does the QNE 67 have a state relative to a session identifier included in the QUERY message?). In this case, since the QNE 67 does not have a state, the QNE 67 makes a decision as being not the CRN. Moreover, the QNE 67 transmits the QUERY message toward the CN 60 (step S2405).

On the other hand, the QNE 65 which has received the QUERY message also makes a decision shown in FIG. 25. After the reception of the QUERY message (step S2501: receiving a message), the QNE 67 which has received the QUERY message checks whether or not the QNE 67 itself has a state (resource reservation) with respect to a session identifier included in this QUERY message (step S2502: Does the QNE 67 itself have a state relative to a session identifier included in the QUERY message?). In this case, since the QNE 65 has this state, the QNE 65 checks whether or not the identification information for specifying which of flows is next taken for the preparation of establishment of a predictive path is included in the QUERY message (step S2503: Is an identifier for specifying a flow of an old path included in the QUERY message?). In this case, since the flow identifier used in the path 24 is included as an identifier for specifying the flow of the old path, the QNE 67 subsequently checks whether or not this flow identifier is included in the state relative to the session identifier which was checked in the step S2501 (step S2504: a state relative to the specified flow?). In a case in which this flow identifier is not included in the state relative to the session identifier, the QNE 67 makes a decision that it is not the CRN, and the QUERY message is further transferred.

The QNE 65 belongs to the path 24 and a given flow identifier is included in the state, and the QNE 65 subsequently checks the information (SII: Source Identification Information) on an adjacent QNE which has transmitted the QUERY message thereto (step S2505: Is SII equal?). That is, the SII information in the path 24 is included in the state of the QNE 65 (that is, having the information indicative of the QNE 63 corresponding to SII), and the QNE 65 makes a comparison between this information and the information on the QNE which has sent the QUERY message in the step S2405 (that is, the information on the QNE 67) . If the comparison decision shows that these information are different from each other, the QNE 65 makes a decision that the QNE 65 itself is a CRN. On the other hand, if they are identical to each other, the QNE 65 makes a decision that it is not a CRN.

When the QNE 65 makes a decision that it is a CRN (step S2407: making a comparison with a session identifier or SII so as to recognize that the QNE 65 itself is a crossover node), for notifying, to a proxy (QNE 68), the fact that it is a CRN, the QNE 65 transmits a RESPONSE message to the proxy 68 (steps S2409 and S2411).

In addition to the QNE (in this case, the QNE 65) which has recognized that it is a CRN notifying, to the proxy 68, the fact that it is the CRN, various CRN using methods are conceivable. For example, in a case in which the messages sent in the step S2403 and the step S2405 include the NCoA of the MN 10 or a flow identifier, it is also possible that the QNE 65 which has recognized that it is an CRN transmits a RESERVE message for setting up a new path in a direction of the MN 10 and a RESERVE message for updating in a direction of the CN 60 without returning a RESPONSE message so as to conduct an operation related to a resource reservation.

Moreover, at a resource reservation, the employment of a flow identifier is not always necessary for identifying packet data to which a reserved resource is to be given. In this case, for example, a different identifier (in this case, referred to as a filter) can also be placed in a message (QUERY message, RESERVEmessage or the like) . Moreover, in this case, instead of a flow identifier, a filter can also be used as an identifier to be used for finding a CRN or for making a resource reservation with respect to a new path.

Incidentally, it is also appropriate that a plurality of identifiers each (flow identifier or filter) for identifying the packet data to which a reserved resource is to be given as mentioned above exist with respect to one resource reservation. That is, it is also acceptable that a flow identifier list or filter list exists with respect to one resource reservation. In this case, when a QNE receives a data packet having the information contents identical to those of one of the identifiers existing in a list (flow identifier list or filter list), the QNE can allocate a reserved resource.

Moreover, for example, in a case of updating a reservation in a range from the CRN (QNE 65) to the CN 60 as mentioned above, the concept of this list (flow identifier list or filter list) is also available. One example will be described with reference to FIGs. 1 and 21. In this case, as an identifier for identifying packet data to which a reserved resource is to be given, a flow identifier is put to use, and a flow identifier list is used as a list.

A resource reservation in an old path (path 24) currently exists in the QNE 65 and the QNE 66. That is, in the QNE 65 and the QNE 66, a resource is allocated with respect to an identifier (or a list including this flow identifier) including the CoA of the MN 10 before movement.

After receiving a message E in the step S5013, as the RESERVE (update) processing, the QNE 65 adds a new flow identifier (including the NCoA of the MN 10) included in the message E to a flow identifier list to which a resource is allocated with respect to the path 24, and transmits a RESERVE (update) message toward the CN 60 (step S5015). Upon receipt of this RESERVE (update) message, the QNE 66 likewise adds the new flow identifier to the flow identifier list to which the resource is allocated with respect to the path 24 and transmits a RESERVE (update) message toward the CN 60. Thus, the QNE 65 and the QNE 66 have a resource reservation with respect to both the path 24 and path 34. With respect to the path 24 and the path 34, a reservation is not separately made, but both the path 24 and path 34 share a resource, thereby avoiding the double resource reservation.

In addition, after this processing, the flow identifier for the path 24 can be removed from the flow identifier lists of the QNE 65 and the QNE 66 after the MN 10 moves to the subnet 30 and starts the transmission/reception of data. As the removal method, it is also acceptable that a timer is provided so that the flow identifier is automatically deleted when this timer becomes longer than a predetermined period of time, or that the flow identifier is explicitly deleted by a deletion message.

### INDUSTRIAL APPLICABILITY

A communication handover method, communication message processing method and a program for executing these methods by the use of a computer according to the present invention enable a mobile terminal, which conducts handover, to promptly and continuously accept an additional service, the mobile terminal has accepted before the handover, after the handover, and they are applicable to a technical field related to the handover of a mobile terminal which makes radio communications, particularly, applicable to a technical field related to the handover of a mobile terminal which conducts radio communications using a mobile IPv6 protocol forming a next-generation internet protocol and related to a QoS assurance using the NSIS.

## Claims

1. A communication handover method for a mobile terminal so arranged as to, in a communication system in which a plurality of access routers each constituting a subnet are connected through a communication network and at least one access point forming a unique communicable area is connected to each of said plurality of access routers, make a communication with said access router, to which said access point is connected, through a radio communication with said access point in said communicable area, comprising:
a reception step of, when said mobile terminal makes communication switching froman access point which is presently in communication to a different access point, receiving information on said different access point from said different access point;
an information acquiring step of, when the communication switching is made to said different access point, acquiring information on a router capable of making a preparation related to an additional service, said mobile terminal desires, after the communication switching on the basis of said information on said different access point received in said reception step, and
an information transmitting step of generating a message including information on said additional service presently in acceptance during communication and, on the basis of said information on said router capable of making the preparation related to said additional service after the communication switching, sending said message through said access point, which is presently in communication, to said router capable of making the preparation related to said additional service after the communication switching.

2. The communication handover method according to claim 1, comprising a storage step in which said mobile terminal stores, in predetermined information storing means of said mobile terminal, correspondence information describing correspondence relationship between said information on said access point and said information on said router capable of making the preparation related to said additional service after the communication switching.

3. The communication handover method according to claim 2, wherein, in said information acquiring step, said information on said router capable of making the preparation related to said additional service after the communication switching and associated with said information on said different access point is acquired from said correspondence information on the basis of said information on said different access point received in said reception step.

4. A communication handover method for a mobile terminal so arranged as to, in a communication system in which a plurality of access routers each constituting a subnet are connected through a communication network and at least one access point forming a unique communicable area is connected to each of said plurality of access routers, make a communication with said access router, to which said access point is connected, through a radio communication with said access point in said communicable area, comprising:
a reception step of, when said mobile terminal makes communication switching from an access point which is presently in communication to a different access point, receiving information on said different access point from the different access point; and
an information transmitting step of generating a message including said information on said different access point received in said reception step and information on an additional service presently in acceptance during communication and, on the basis of said information on said access point, transmitting said message through said access point presently in communication to a predetermined server capable of acquiring information on a router capable of, when the communication switching is made to said different access point, making a preparation related to said additional service, said mobile terminal desires, after the communication switching.

5. A communication handover method for a mobile terminal so arranged as to, in a communication system in which a plurality of access routers each constituting a subnet are connected through a communication network and at least one access point forming a unique communicable area is connected to each of the plurality of access routers, make a communication with said access router, to which said access point is connected, through a radio communication with said access point in said communicable area, comprising:
an information transmitting step of generating a message including information on an additional service presently in acceptance during communication and, when said mobile terminal carries out communication switching from an access point presently in communication to a different access point, transmitting said message through said access point presently in communication to all predetermined routers each capable of realizing said additional service after said communication switching and selected by said mobile terminal.

6. The communication handover method according to any one of claims 1, 4 and 5, comprising:
a step in which said mobile terminal specifies an access router having said different access point as a following on the basis of said information on said different access point received in said reception step;
a step of acquiring information on said access router having said different access point as a following; and
an address generating step of generating address information available in said subnet, to which said access router pertains, on the basis of said information on said access router having said different access point as a following.

7. The communication handover method according to claim 6, wherein, in said information transmitting step, said message is transmitted in a state where said address information generated in said address generating step is included in said message.

8. The communication handover method according to any one of claims 1, 4 and 5, wherein said additional service is a QoS assurance.

9. A communication handover program for executing the communication handover method according to any one of claims 1, 4 and 5 through the use of a computer.

10. A communication message processing method for a router provided in a communication system so arranged that a plurality of access routers each constituting a subnet are connected through a communication network and at least one access point forming a unique communicable area is connected to each of said plurality of access routers and a mobile terminal existing in said communicable area makes a communication with said access router, to which said access point is connected, through a radio communication with said access point, with said router being capable of making a preparation related to an additional service, said mobile terminal desires, after communication switching when said mobile terminal switches the communication with said access point, comprising:
a first information receiving step of receiving, from said mobile terminal, a message including information on said additional service said mobile terminal presently accepts during communication;
a step of generating a message for a preparation of said additional service on the basis of said information on said additional service;
a terminal specifying step of specifying a partner terminal, with which said mobile terminal presently makes a communication, on the basis of said information on said additional service said mobile terminal presently accepts during the communication;
an information transmitting step of generating a message for acquiring information, which enables the preparation related to said additional service after the communication switching, on the basis of said information on said additional service said mobile terminal presently accepts during the communication, and transmitting said message to said partner terminal; and
a second information receiving step of receiving a message including said information, which enables the preparation related to said additional service after the communication switching, from said partner terminal or from an arbitrary node lying on a path of said message to said partner terminal.

11. The communication message processing method according to claim 10, comprising a storage step of storing said information, which enables the preparation related to said additional service after the communication switching, received from said partner terminal or from said arbitrary node lying on said path of said message to said partner terminal in said second information receiving step.

12. The communication message processing method according to claim 10, comprising a step of generating a message including said information, which enables the preparation related to said additional service after the communication switching, received from said partner terminal in said second information receiving step to transmit said message to said mobile terminal.

13. The communication message processing method according to claim 12, comprising:
a step of verifying the validity of said address information when address information usable by said mobile terminal in said subnet, to which said access router pertains, is included in saidmessage received from saidmobile terminal, which does not exist in said subnet to which said access router pertains, in said first information receiving step; and
a step of, when the validity of said address information is grasped, previously establishing a path for said additional service, said mobile terminal accepts after the communication switching, on the basis of said address information.

14. A communication message processing method for a node or a router provided in a communication system so arranged that a plurality of access routers each constituting a subnet are connected through a communication network and at least one access point forming a unique communicable area is connected to each of said plurality of access routers and a mobile terminal existing in said communicable area makes a communication with said access router, to which said access point is connected, through a radio communication with said access point, and made to constitute a path related to an additional service when said mobile terminal makes a communication with a predetermined communication terminal, comprising:
a reservation judging step of, upon receipt of a message including a flow identifier and a session identifier, related to a predetermined path, for checking whether said predetermined path is set or not, making a judgment as to whether or not a resource reservation is made with respect to said flow identifier and said session identifier included in said message; and
a step of transmitting a message including a result of the judgment in said reservation judgment step to a source or destination of said message for checking whether said predetermined path is set or not.

15. A communication message processing method for a node or a router provided in a communication system so arranged that a plurality of access routers each constituting a subnet are connected through a communication network and at least one access point forming a unique communicable area is connected to each of said plurality of access routers and a mobile terminal existing in said communicable area makes a communication with said access router, to which said access point is connected, through a radio communication with said access point, and made to constitute a path related to an additional service when said mobile terminal makes a communication with a predetermined communication terminal, comprising:
a reservation judging step of, upon receipt of a message including a flow identifier and a session identifier, related to a predetermined path, for checking whether said predetermined path is set or not, making a judgment as to whether or not a resource reservation is made with respect to said flow identifier and said session identifier included in said message; and
a transfer step of, when a judgment in said reservation judging step shows that the resource reservation is made with respect to said flow identifier and said session identifier included in said message, adding address information on an interface used for said resource reservation to a predetermined portion of said message and transferring said message.

16. The communication message processing method according to claim 15, wherein said predetermined portion indicates an adding sequence of said interface address information.

17. A communication message processing method for a communication node designed to, in a communication system in which a plurality of access routers each constituting a subnet are connected through a communication network and at least one access point forming a unique communicable area is connected to each of said plurality of access routers, make a communication with a mobile terminal so arranged as to make a communication with said access router connected to said access point through a radio communication with said access point in said communicable area and designed to be capable of establishing a path related to an additional service when making a communication with said mobile terminal, comprising:
a step of, upon receipt of a message including a flow identifier and a session identifier, related to a predetermined path, for seeking said predetermined path, generating a new message including a result of the seeking of said predetermined path in said message to transmit the new message as a response to said message.

18. The communication message processing method according to any one of claims 14, 15 and 17, wherein said message for checking whether said predetermined path is set or not, or said message for seeking said predetermined path is a QUERY message or a RESPONSE message having an area capable of including a flow identifier and a session identifier which are related to the path.

19. The communication message processing method according to any one of claims 14, 15 and 17, wherein said message for checking whether said predetermined path is set or not, or said message for seeking said predetermined path has an area capable of including information on a free resource.

20. A communication message processing method for a node or a router provided in a communication system so arranged that a plurality of access routers each constituting a subnet are connected through a communication network and at least one access point forming a unique communicable area is connected to each of saidplurality of access routers and amobile terminal existing in said communicable area makes a communication with said access router, to which said access point is connected, through a radio communication with said access point, and made to constitute a path related to an additional service when saidmobile terminal makes a communication with a predetermined communication terminal, comprising:
a reservation judging step of, upon receipt of a message including a session identifier related to a predetermined path for checking whether said predetermined path is set or not, making a judgment as to whether or not a state exists with respect to said session identifier; and
a transmission step of, when said reservation judging step shows that said state does not exist with respect to said session identifier, transmitting said message toward said predetermined communication terminal.

21. A communication message processing method for a node or a router provided in a communication system so arranged that a plurality of access routers each constituting a subnet are connected through a communication network and at least one access point forming a unique communicable area is connected to each of said plurality of access routers and a mobile terminal existing in said communicable area makes a communication with said access router, to which said access point is connected, through a radio communication with said access point, and made to constitute a path related to an additional service when said mobile terminal makes a communication with a predetermined communication terminal, comprising:
a reservation judging step of, upon receipt of a message including a session identifier related to a predetermined path for checking whether said predetermined path is set or not, making a judgment as to whether or not a state exists with respect to said session identifier;
a reservation judging step of, upon receipt of a message including identification information for specifying a flow and a session identifier related to a predetermined path for checking whether said predetermined path is set or not, making a judgment as to whether or not a state exists with respect to said flow specifying identification information; and
a judgment step of, when said reservation judging step shows that said state exists with respect to said session identifier, making a judgment as to whether or not a different adjacent node or router is specified in each of said state and said message; and
a CRN judging step of, when said judgment step shows that said adjacent node or router is specified, making a judgment that it is a crossover node.

22. The communication message processing method according to claim 21, comprising a notification step of, when said CRN judging step shows that it is a crossover node, issuing a notification to the effect that it is a crossover node, to a predetermined node.

23. The communication message processing method according to claim 21, comprising a step of, in a state where said node or said router constituting said path related to said additional service has a flow identification list for storing correspondence relationship between each resource and information for specifying a flow, adding or deleting said flow specifying information on said path related to said additional service, which goes through it, to or from said flow identification list.

24. The communication message processing method according to claim 23, comprising an updating step of, when said CRN judging step shows that it is a crossover node, transmitting, toward said communication terminal, a message for adding information, which is for specifying a new flow, to said flow identification list in which the resource for said predetermined path is allocated with respect to each receiving node or router.

25. A communication message processing program for executing the communication message processing method according to any one of claims 10, 14, 15, 17, 20 and 21 through the use of a computer.
